# EUROPÄISCHE PATENTSCHRIFT

(11) **EP 3 619 274 B1**
(45) Veröffentlichungstag und Bekanntmachung des Hinweises auf die Patenterteilung: **09.09.2020**
(21) Anmeldenummer: 16704155.7
(22) Anmeldetag: 04.02.2016
(51) Int. Cl.: C09D 183/10, C08G 65/336, C08L 71/02, C08L 83/10

(54) **WÄSSRIGE DISPERSIONEN VON ORGANOSILICIUMVERBINDUNGEN**
AQUEOUS DISPERSIONS OF ORGANOSILICON COMPOUNDS
DISPERSIONS AQUEUSES À BASE DE COMPOSÉS ORGANOSILICIQUES

(30) Priorität: 09.02.2015 DE 102015202278
(43) Veröffentlichungstag der Anmeldung: 11.03.2020
(73) Patentinhaber: Wacker Chemie AG, 81737 München (DE)
(72) Erfinder: SCHEIM, Uwe, 01640 Coswig (DE); KAUSCHKE, Marco, 01612 Glaubitz (DE); MARRACK, Stephan, 01689 Weinböhla (DE); PRASSE, Marko, 01612 Glaubitz (DE); RAUTSCHEK, Holger, 01612 Nünchritz (DE)
(74) Vertreter: Budczinski, Angelika
(86) Internationale Anmeldenummer: PCT/EP2016/052400
(87) Internationale Veröffentlichungsnummer: WO 2016/128293

(56) Entgegenhaltungen:
- EP-A2- 0 771 855
- DE-A1-102011 006 130
- DE-A1-102011 081 264
- DE-A1-102012 223 139
- DE-A1-102013 213 835

## Beschreibung

Die Erfindung betrifft Dispersionen von Organosiliciumverbindungen, die sich nach Entfernen von Wasser in Elastomere überführen lassen, Verfahren zu deren Herstellung und deren Verwendung als Dicht- und Spachtelmassen, Klebstoffe, Fugenmörtel, Beschichtungen von Holz, Beton und anderen Baustoffen und Bindemittel für Partikel, wie z.B. Holzspäne.

Dispersionen von silylterminierten Polyethern sind bereits bekannt. Beispielsweise beschreibt JP-A 59-6219 Emulsionen von silylterminierten Polyethern. In EP-A 771 855 werden vorvernetzte emulgierte silylterminierte Polymere offenbart, insbesondere Polyether. Durch die Vorvernetzung entsteht eine Suspension.

US-A 7,332,541 beschreibt Systeme aus silylterminierten Polyethern mit regelbarer Reaktivität. Diese Systeme können sowohl wasserfrei als auch als Emulsionen bereitgestellt werden. US-A 7,977,445 offenbart Emulsionen von silylterminierten Polyethern, bei denen die Silylfunktion über eine CH₂-Gruppe an eine funktionelle Gruppe mit einem freien Elektronenpaar gebunden ist, z.B. an eine aminische Funktion.

Allen diesen Mischungen ist gemein, dass sie entweder nicht klebfrei aushärten oder bei entsprechender Katalyse zwar eine klebfreie Aushärtung erfolgt, dann aber die Emulsionen oder Dispersionen schlecht lagerstabil sind.

Überraschenderweise wurde nun gefunden, dass Emulsionen enthaltend im Wesentlichen silylterminierte Polymere und alkoxyfunktionelle Siliciumverbindungen hervorragend lagerstabile Emulsionen ergeben, die unter der Wirkung von Katalysatoren nach Entfernen des Wassers schnell zu klebfreien Produkten aushärten.

Gegenstand der Erfindung sind Dispersionen enthaltend
(A) silylterminierte Polymere der Formel 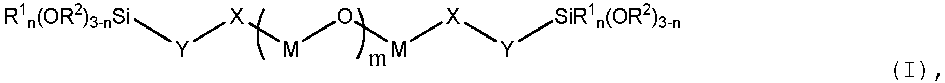 wobei
   **R**¹ gleich oder verschieden sein kann und einen einwertigen, gegebenenfalls substituierten, SiC-gebundenen Kohlenwasserstoffrest darstellt,
   **R²** gleich oder verschieden sein kann und Wasserstoffatom oder einen einwertigen, gegebenenfalls substituierten Kohlenwasserstoffrest darstellt,
   **X** gleich oder verschieden sein kann und -O-, -NR³ mit R³ gleich Wasserstoffatom, aliphatisch gesättigte oder aromatische Kohlenwasserstoffreste mit 1 bis 12 Kohlenstoffatomen bedeutet,
   **Y** gleich oder verschieden sein kann und Reste -(CH₂)₃-, -(CH₂)₃NHC(=O)-, -CH₂- oder -CH₂NHC(=O)- darstellt,
   **M** gleich oder verschieden sein kann und Reste -CH₂CH₂-, -CH₂CH(CH₃)-, -(CH₂)₄- oder -(CH₂)₆- bedeutet,
   **n** gleich 0 oder 1 ist und
   **m** eine ganze Zahl von 50 bis 500, bevorzugt von 80 bis 400, insbesondere 200 bis 400, darstellt,
(B) Organosiliciumverbindungen enthaltend Einheiten der Formel

   R⁴ₐ(R⁵O)_{b}SiO_{(4-a-b)/2} (II),

   wobei
   **R**⁴ gleich oder verschieden sein kann und einen einwertigen, SiC-gebundenen, gegebenenfalls mit Halogenresten, Sauerstoff oder Stickstoff substituierten Kohlenwasserstoffrest bedeutet,
   **R**⁵ gleich oder verschieden sein kann und Wasserstoffatom oder einen einwertigen, gegebenenfalls substituierten Kohlenwasserstoffrest bedeutet,
   **a** 0, 1, 2 oder 3 ist,
   **b** 0, 1, 2 oder 3 ist,
   mit der Maßgabe dass die Summe a+b≤3 ist, pro Molekül mindestens zwei Gruppen -OR⁵ anwesend sind und in mindestens 40 % aller Einheiten der Formel (II) a gleich 0 oder 1 ist,
(C) Emulgatoren,
(D) Wasser, gegebenenfalls (E) Katalysatoren,
   gegebenenfalls (F) Füllstoffe und
   gegebenenfalls (G) Additive.

Beispiele für Reste R¹ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; langkettige n-Alkylreste wie n-Decyl-, n-Dodecyl-, n-Tetradecyl-, n-Hexadecyl-, n-Octadecyl-, n-Eicosyl-, n-Docosyl-, n-Tetracosyl-, n-Hexacosyl-, n-Octacosyl-, n-Triacontyl-, n-Dotriacontyl- und n-Tetracontylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Falls es sich bei Rest R¹ um substituierte Kohlenwasserstoffreste handelt, sind als Substituenten Halogenreste, wie z.B. Fluor oder Chlor, Sauerstoff, wie z.B. Epoxyreste, oder Stickstoff, wie z.B. Aminreste, bevorzugt.

Beispiele für substituierte Reste R¹ sind Halogenalkylreste, wie der 3,3,3-Trifluor-n-propylrest, der 2,2,2,2",2",2"-Hexafluorisopropylrest und der Heptafluorisopropylrest, und Halogenarylreste, wie der o-, m- und p-Chlorphenylrest, der 3-Chlorpropylrest, durch Sauerstoff substituierte Reste wie der 3-Glycidyloxypropylrest, durch Stickstoff substituierte Reste, wie der 3-Aminopropylrest und der 3-(2-Aminoethyl) aminopropylrest.

Bevorzugt handelt es sich bei Rest R¹ um gegebenenfalls mit Halogenatomen substituierte, einwertige Kohlenwasserstoffreste mit 1 bis 12 Kohlenstoffatomen, besonders bevorzugt um Alkyl- oder Arylreste mit 1 bis 12 Kohlenstoffatomen, insbesondere um den Methylrest.

Beispiele für Rest R² sind Wasserstoffatom oder die für Rest R¹ angegebenen Beispiele.

Bevorzugt handelt es sich bei Rest R² um Wasserstoffatom oder gegebenenfalls mit Halogenatomen substituierte Alkylreste mit 1 bis 12 Kohlenstoffatomen, besonders bevorzugt um Alkylreste mit 1 bis 4 Kohlenstoffatomen, insbesondere um den Methyl- oder Ethylrest.

Beispiele für Rest R³ sind die für Rest R¹ angegebenen Beispiele für Kohlenwasserstoffreste mit 1 bis 12 Kohlenstoffatomen, wobei es sich bei Rest R³ bevorzugt um Alkyl- oder Arylreste mit 1 bis 12 Kohlenstoffatomen handelt.

Bei Rest X handelt es sich bevorzugt um -O-.

In Formel (I) sind die Reste Y bevorzugt über die CH₂-Gruppe an Silicium gebunden.

Bevorzugt handelt es sich bei Rest Y um -(CH₂)₃NHC(=O)-der -CH₂NHC(=O)- besonders bevorzugt um -CH₂NHC(=O)-.

In Komponente (A) haben bevorzugt mindestens 90 %, besonders bevorzugt mindestens 99 %, aller Reste M die Bedeutung von -CH₂CH(CH₃)-.

Im Fall von M gleich -CH₂CH(CH₃)- kann M in beliebigen Richtungen im Molekül der Formel (I) gebunden sein, also -CH₂CH(CH₃)- oder -(CH₃)CHCH₂-.

Beispiele für Komponente (A) sind 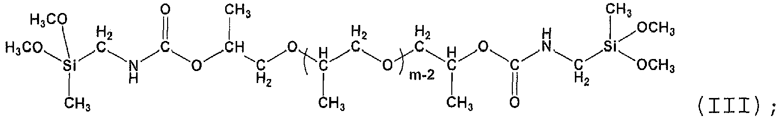 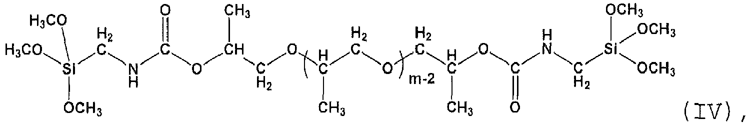 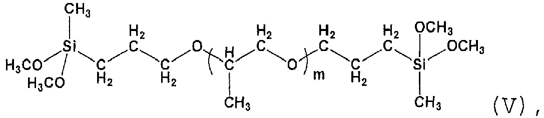 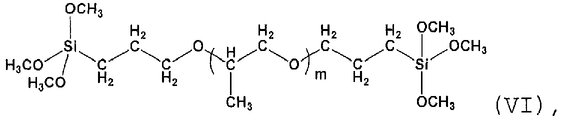 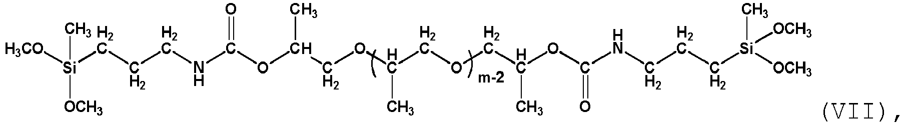 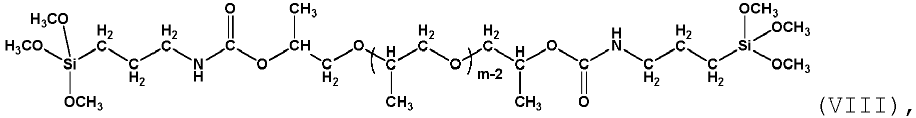 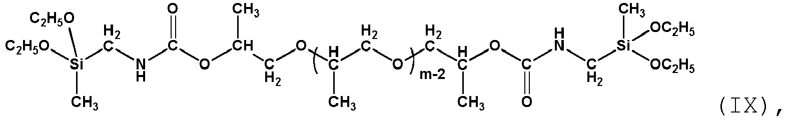 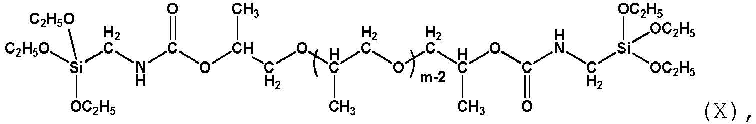 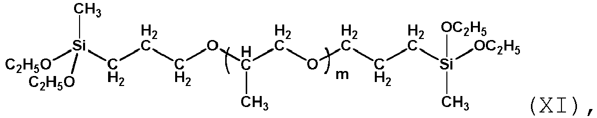 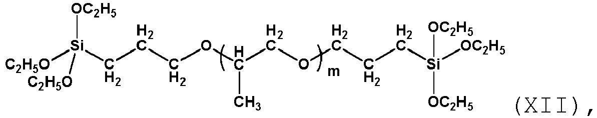 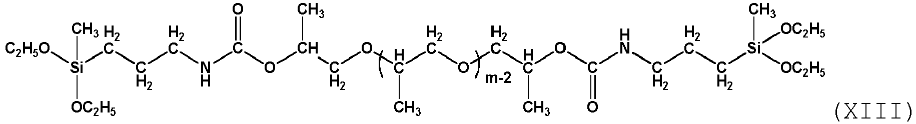 und 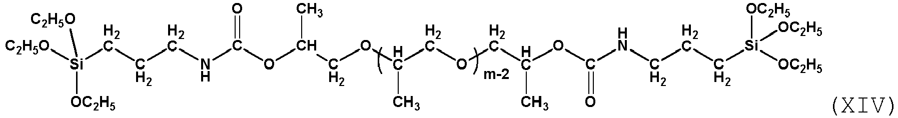 mit m gleich der oben genannten Bedeutung, wobei die Verbindungen der Formeln (III), (IV), (VII), (VIII), (IX), (X), (XIII) oder (XIV) bevorzugt sowie (III) oder (IV) besonders bevorzugt sind, insbesondere (III).

Die erfindungsgemäß eingesetzten Verbindungen (A) sind handelsübliche Produkte oder können nach in der Chemie gängigen Verfahren hergestellt werden.

So können die Polymere (A) durch bekannte Verfahren hergestellt werden, wie beispielsweise durch Additionsreaktion, Hydrosilylierung, Michael-Addition oder Diels-Alder-Addition.

Beispiele für Reste R⁴ sind die oben für R¹ angegebenen Beispiele.

Bevorzugt handelt es sich bei Rest R⁴ um gegebenenfalls mit Halogenatomen, Sauerstoff, wie z.B. Epoxyresten, oder Stickstoff, wie z.B. Aminreste, substituierte, einwertige SiC-gebundene Kohlenwasserstoffreste mit 1 bis 40 Kohlenstoffatomen, besonders bevorzugt um Kohlenwasserstoffreste mit 1 bis 40 Kohlenstoffatomen, insbesondere um Methyl-, Ethyl-, Vinyl-, n-Propyl-, iso-Propyl-, 1-n-Butyl-, 2-n-Butyl-, iso-Butyl-, tert.-Butyl-, n-Hexyl-, n-Octyl-, 2,2,4-Trimethylpentyl-, n-Decyl-, n-Dodecyl-, n-Tetradecyl-, n-Hexadecyl-, n-Octadecyl-, n-Eicosyl-, n-Docosyl-, n-Tetracosyl-, n-Hexacosyl-, n-Octacosyl-, n-Triacontyl-, n-Dotriacontyl- oder n-Tetracontylrest.

Beispiele für Rest R⁵ sind Wasserstoffatom oder die für Rest R¹ angegebenen Beispiele.

Bevorzugt handelt es sich bei Rest R⁵ um Wasserstoffatom oder gegebenenfalls mit Halogenatomen substituierte Alkylreste mit 1 bis 16 Kohlenstoffatomen, besonders bevorzugt um Alkylreste mit 1 bis 4 Kohlenstoffatomen, insbesondere um den Methyl- oder Ethylrest.

Vorzugsweise handelt es sich bei den erfindungsgemäßen Organosiliciumverbindungen (B) um solche, die aus Einheiten der Formel (II) bestehen.

In den erfindungsgemäß eingesetzten Siliciumverbindungen (B) ist bevorzugt in mindestens 50 %, besonders bevorzugt in mindestens 60 %, aller Einheiten der Formel (II) a gleich 0 oder 1.

In den erfindungsgemäß eingesetzten Siliciumverbindungen (B) ist bevorzugt in mindestens 50 %, besonders bevorzugt in mindestens 60 %, aller Einheiten der Formel (II) a gleich 1.

Die erfindungsgemäß eingesetzten Siliciumverbindungen (B) weisen ein Gewichtsmittel Mw von bevorzugt 500 bis 9000 g/mol, besonders bevorzugt von 1000 bis 9000 g/mol, insbesondere von 1500 bis 7000 g/mol, auf.

Die erfindungsgemäß eingesetzten Siliciumverbindungen (B) weisen ein Zahlenmittel Mn von bevorzugt 500 bis 3500 g/mol, besonders bevorzugt von 1000 bis 3500 g/mol, insbesondere von 1000 bis 2500 g/mol, auf.

Die erfindungsgemäß eingesetzten Siliciumverbindungen (B) weisen Polydispersitäten Mw/Mn von bevorzugt 1 bis 4, besonders bevorzugt von 1,2 bis 3,6, auf.

In der vorliegenden Erfindung werden Gewichtsmittel Mw und Zahlenmittel Mn durch Gelpermeationschromatographie (GPC bzw. Size Exclusion Chromatographie (SEC)) entsprechend DIN 55672-1 bestimmt mit Polystyrol Standard und Brechungsindexdetektor (RI-Detektor). Wo nicht anders ausgewiesen, wird THF als Elutionsmittel für phenylhaltige Komponenten und Toluol als Elutionsmittel für nicht-phenylhaltige Komponenten verwendet, und die Analysen werden bei einer Säulentemperatur von 45°C durchgeführt. Die Polydispersität ist der Quotient Mw/Mn.

Beispiele für Siliciumverbindungen (B) enthaltend Einheiten der Formel (II) sind
(MeSiO_{3/2})_{0,88}(MeSi(OH)O_{2/2})_{0,05}(MeSi(OEt)O_{2/2})_{0,06}(Me₂SiO_{2/2})_{0,01} mit Mw= 6600 g/mol, Mn= 2000 g/mol und Mw/Mn = 3,3;
(MeSiO_{3/2})_{0,86}(MeSi(OH)O_{2/2})_{0,02}(MeSi(OEt)O_{2/2})_{0,10}(Me₂SiO_{2/2})_{0,02} mit Mw= 10000 g/mol, Mn= 2300 g/mol und Mw/Mn = 4,3;
(MeSiO_{3/2})_{0,71}(MeSi(OH)O_{2/2})_{0,03}(MeSi(OEt)O_{2/2})_{0,05}(Me₂SiO_{2/2})_{0,21} mit Mw= 4500 g/mol, Mn= 1900 g/mol und Mw/Mn = 2,4;
(MeSiO_{3/2})_{0,88}(MeSi(OH)O_{2/2})_{0,05}(MeSi(OMe)O_{2/2})_{0,06}(Me₂SiO_{2/2})_{0,01} mit Mw= 9000 g/mol, Mn= 2300 g/mol und Mw/Mn = 3,9;
(MeSiO_{3/2})_{0,33}(MeSi(OH)O_{2/2})_{0,05}(MeSi(OEt)O_{2/2})_{0,01}(Me₂SiO_{2/2})_{0,06} (PhSiO_{3/2})_{0,24}(PhSi(OH)O_{2/2})_{0,28}(PhSi(OEt)O_{2/2})_{0,03} mit Mw= 3250 g/mol, Mn= 1300 g/mol und Mw/Mn = 2,5;
(MeSiO_{3/2})_{0,33}(MeSi(OH)O_{2/2})_{0,04}(MeSi(OEt)O_{2/2})_{0,02}(Me₂SiO_{2/2})_{0,06} (PhSiO_{3/2})_{0,34}(PhSi(OH)O_{2/2})_{0,17}(PhSi(OEt)O_{2/2})_{0,04} mit Mw= 2920 g/mol, Mn= 1450 g/mol und Mw/Mn = 2,0;
(MeSiO_{3/2})_{0,34}(MeSi(OH)O_{2/2})_{0,03}(MeSi(OEt)O_{2/2})_{0,02}(PhSiO_{3/2})_{0,45} (PhSi(OH)O_{2/2})_{0,13}(PhSi(OEt)O_{2/2})_{0,03} Mw= 4700 g/mol, Mn= 1800 g/mol und Mw/Mn = 2,6;
(MeSiO_{3/2})_{0,27}(MeSi(OH)O_{2/2})_{0,03}(PhSiO_{3/2})_{0,34}(PhSi(OH)O_{2/2})_{0,14} PhSi(OEt)O_{2/2})_{0,02}(PhMeSiO_{2/2})_{0,17}(PhMeSi(OH)O_{1/2})_{0,03} mit Mw= 2400 g/mol, Mn= 1200 g/mol und Mw/Mn = 2,0;
(PhSiO_{3/2})_{0,45}(PhSi(OH)O_{2/2})_{0,44}PhSi(OEt)O_{2/2})_{0,09}(PhSi(OH)₂O_{1/2})_{0,02} mit Mw= 2900 g/mol, Mn= 1500 g/mol und Mw/Mn = 1,9;
(PhSiO_{3/2})₀,₄₈(PhSi(OH)O_{2/2})_{0,17}(PhSi(OEt)O_{2/2})_{0,02} (CH₃(CH₂)₂SiO_{3/2})_{0,25}(CH₃(CH₂)₂Si(OH)O_{2/2})_{0,08} mit Mw= 1800 g/mol, Mn= 1250 g/mol und Mw/Mn = 1,4;
(PhSiO_{3/2})_{0,24}(PhSiO_{2/2}(OCH₃)_{0,52}(PhSiO_{1/2}(OCH₃)₂)_{0,24} mit Mw= 986 g/mol Mn= 765 g/mol, Mw/Mn= 1,29;
(MeSiO_{3/2})_{0,32}(MeSi(OH)O_{2/2})_{0,06}(MeSi(OEt)O_{2/2})_{0,01}(Me₂SiO_{2/2})_{0,06} (PhSiO_{3/2})_{0,23}(PhSi(OH)O_{2/2})_{0,29}(PhSi(OEt)O_{2/2})_{0,03} mit Mw= 1700 g/mol, Mn= 1200 g/mol und Mw/Mn = 1,4;
(PhSiO_{3/2})_{0,50}(PhSi(OH)O_{2/2})_{0,15}(PhSi(OEt)O_{2/2})_{0,02}(CH₃(CH₂)₂SiO_{3/2})_{0,26} (CH₃(CH₂)₂Si(OH)O_{2/2})_{0,07} mit Mw= 2800 g/mol, Mn= 1200 g/mol und Mw/Mn = 2,3;
(MeSiO_{3/2})_{0,81}(MeSi(OH)O_{2/2})_{0,04}(MeSi(OEt)O_{2/2})_{0,05}(Me₂SiO_{2/2})_{0,10} mit Mw= 6500 g/mol, Mn= 1900 g/mol und Mw/Mn = 3,4;
wobei Me gleich Methylrest, Et gleich Ethylrest und Ph gleich Phenylrest bedeutet.
(SiO_{4/2})_{0,50}(Me₃SiO_{1/2})_{0,39}(Si(OEt)O_{3/2})_{0,06}(Si(OEt)₂O_{2/2})_{0,02} (Si(OEt)₃O_{1/2})_{0,01}(Si(OH)O_{3/2})_{0,02} mit Mw = 7400 g/mol, Mn = 3100 g/mol und Mw/Mn = 2,4;
(SiO_{4/2})_{0,46}(Me₃SiO_{1/2})_{0,43}(Si(OEt)O_{3/2})_{0,07}(Si(OEt)₂O_{2/2})_{0,02}-(Si(OEt)₃O_{1/2})_{0,01}(Si(OH)O_{3/2})_{0,01} mit Mw = 1400 g/mol, Mn = 900 g/mol und Mw/Mn = 1,6;
(SiO_{4/2})_{0,46}(Me₃SiO_{1/2})_{0,37}(ViMe₂SiO_{1/2})_{0,06}(Si(OEt)O_{3/2})_{0,07} (Si(OEt)₂O_{2/2})_{0,02}(Si(OEt)₃O_{1/2})_{0,01}(Si(OH)O_{3/2})_{0,04} mit Mw = 5300 g/mol, Mn = 2600 g/mol und Mw/Mn = 2,0;
(SiO_{4/2})_{,38}(Me₃SiO_{1/2})_{0,42}(ViMe₂SiO_{1/2})_{0,06}(Si(OEt)O_{3/2})_{0,07} (Si(OEt)₂O_{2/2})_{0,02}(Si(OEt)₃O_{1/2})_{0,01}(Si(OH)O_{3/2})_{0,04} mit Mw = 2600 g/mol, Mn = 1600 g/mol und Mw/Mn = 1,6;
(MeSiO_{3/2})_{0,37}(MeSi(OEt)O_{2/2})_{0,46}(MeSi(OEt)₂O_{1/2})_{0,17} mit Mw = 2400 g/mol, Mn = 900 g/mol und Mw/Mn = 2,7;
(MeSiO_{3/2})_{0,37}(MeSi(OH)O_{2/2})_{0,01}(MeSi(OEt)O_{2/2})_{0,46}(MeSi(OEt)₂O_{1/2})_{0,15} (Me₂SiO_{2/2})_{0,01} mit Mw = 2400 g/mol, Mn = 900 g/mol und Mw/Mn = 2,7,
(MeSiO_{3/2})_{0,29}(MeSi(OH)O_{2/2})_{0,01}(MeSi(OMe)O_{2/2})_{0,47}(MeSi(OMe)₂O_{1/2})_{0,23} mit Mw = 2300 g/mol, Mn = 600 g/mol und Mw/Mn = 3,8;
(MeSiO_{3/2})_{0,32}(MeSi(OMe)O_{2/2})₀,₄₈(MeSi(OMe)₂O_{1/2})_{0,20} mit Mw = 3300 g/mol, Mn = 900 g/mol und Mw/Mn = 3,7;
(PhSiO_{3/2})_{0,23}(PhSi(OMe)O_{2/2})_{0,51}(PhSi(OMe)₂O_{1/2})_{0,26} mit Mw = 1000 g/mol, Mn = 700 g/mol und Mw/Mn = 1,4;
(MeSiO_{3/2})_{0,10}(MeSi(OMe)O_{2/2})_{0,17}(MeSi(OMe)₂O_{1/2})_{0,03}(PhSiO_{3/2})_{0,15} (PhSi(OMe)O_{2/2})₀,₃₁(PhSi(OMe)₂O_{1/2})_{0,20}(Me₂SiO_{2/2})_{0,04} mit Mw = 1800 g/mol, Mn = 900 g/mol und Mw/Mn= 2,0;
(MeSiO_{3/2})_{0,10}(MeSi(OMe)O_{2/2})_{0,15}(MeSi(OMe)₂O_{1/2})_{0,03} (MeSi(O(CH₂)₃CH₃)O_{2/2})_{0,03}(PhSiO_{3/2})_{0,15}(PhSi(OMe)O_{2/2})_{0,24} (PhSi(OMe)₂O_{1/2})_{0,15}(PhSi(O(CH₂)₃CH₃)O_{2/2})_{0,06} (PhSi(OMe)(O(CH₂)₃CH₃)O_{1/2})_{0,04}(PhSi(O(CH₂)₃CH₃)₂O_{1/2})_{0,01}(Me₂SiO_{2/2})_{0,04} mit Mw = 1400 g/mol, Mn = 800 g/mol und Mw/Mn = 1,8; (i-OctSi(OMe)(OH)O_{1/2})_{0,01}(i-OctSi(OMe)O_{2/2})_{0,10}(i-OctSi-(OMe)₂O_{1/2})_{0,16}(MeSiO_{3/2})_{0,26}(MeSi(OMe)O_{2/2})_{0,36}(MeSi(OMe)₂O_{1/2})_{0,11} mit Mw = 3000 g/mol, Mn = 1500 g/mol und Mw/Mn = 2,0;
(Si(OEt)₂O_{2/2})_{0,42}(Si(OEt)O_{3/2})_{0,19}(Si(OEt)₃O_{1/2})_{0,39} mit Mw = 1000 g/mol, Mn = 800 g/mol und Mw/Mn = 1,2;
(Si(OEt)₂O_{2/2})_{0,48}(Si(OEt)O_{3/2})_{0,35}(Si(OEt)₃O_{1/2})_{0,09}(SiO_{4/2})_{0,08} mit Mw = 1400 g/mol, Mn = 900 g/mol und Mw/Mn = 1,6;
(MeSiO_{3/2})_{0,23}(i-OctSiO_{3/2})_{0,06}(MeSi(OMe)O_{2/2})_{0,35} (i-OctSi(OMe)O_{2/2})_{0,09}(MeSi(OEt)₂O_{1/2})_{0,19}(i-OctSi(OEt)₂O_{1/2})_{0,08} mit Mw = 1400 g/mol, Mn = 600 g/mol und Mw/Mn = 2,3; und
(MeSiO_{3/2})_{0,22}(i-OctSiO_{3/2})_{0,05}(MeSi(OH)O_{2/2})_{0,01}(MeSi(OMe)O_{2/2})_{0,33} (i-OctSi(OMe)O_{2/2})_{0,11}(MeSi(OMe)₂O_{1/2})_{0,20}(i-OctSi(OMe)₂O_{1/2})_{0,08} mit Mw = 1500 g/mol, Mn = 650 g/mol und Mw/Mn = 2,3;
wobei Me gleich Methylrest, Vi gleich Vinylrest, Et gleich Ethylrest, i-Oct gleich 2,4,4-Trimethylpentylrest und Ph gleich Phenylrest bedeutet.

Bevorzugt handelt es sich bei Siliciumverbindungen (B) um Verbindungen enthaltend Einheiten der Formel (II) mit R⁴ gleich Methyl-, 2,4,4-Trimethylpentylrest oder Phenylrest sowie R⁵ gleich Methyl- oder Ethylrest, besonders bevorzugt um Verbindungen bestehend aus Einheiten der Formel (II) mit R⁴ gleich Methyl- oder Phenylrest sowie R⁵ gleich Methyl- oder Ethylrest, insbesondere um Verbindungen bestehend aus Einheiten der Formel (II) mit R⁴ gleich Phenylrest sowie R⁵ gleich Methyl- oder Ethylrest.

Die erfindungsgemäß eingesetzten Verbindungen (B) sind handelsübliche Produkte oder können nach in der Chemie gängigen Verfahren hergestellt werden.

Die Menge an Komponente (B) in den erfindungsgemäßen Dispersionen kann in weiten Bereichen variieren und richtet sich in erster Linie nach Art der Anwendung der Dispersion und beträgt vorzugsweise 10 bis 3000 Gewichtsteile, besonders bevorzugt 10 bis 1000 Gewichtsteile, Komponente (B), bezogen auf 100 Gewichtsteile Komponente (A).

So wird Komponente (B) in Mengen von bevorzugt 10 bis 100 Gewichtsteilen, bezogen auf 100 Gewichtsteile Komponente (A), eingesetzt, falls die erfindungsgemäßen Dispersionen in Bereichen eingesetzt werden, bei denen es auf hohe Elastizität ankommt, wie z.B. Farben. Werden die erfindungsgemäßen Dispersionen für Anwendungen eingesetzt bei denen hohe Festigkeiten erforderlich sind, wie z.B. bei Mörtelanwendungen, beträgt die Menge an Komponente (B) vorzugsweise mehr als 100 bis 1000 Gewichtsteile, bezogen auf 100 Gewichtsteile Komponente (A).

Als Emulgatoren (C) können alle Verbindungen eingesetzt werden, die zur Emulgierung der Komponenten (A) und (B) in Wasser geeignet sind. Das können nichtionogene, anionische, kationische, amphotere Tenside sein aber auch Polymer wie z.B. Polyvinylalkohole, Celluloseether oder Polyacrylate.

Beispiele für kationische Emulgatoren sind alle bekannten quartären Ammoniumverbindungen, die mindestens einen substituierten oder unsubstituierten Kohlenwasserstoffrest mit mindestens 10 Kohlenstoffatomen tragen, wie Dodecyldimethylammoniumchlorid, Tetradecyltrimethylammoniumbromid, Stearyltrimethylammoniumchlorid, Distearyldimethylammoniumchlorid, Cetyltrimethylammoniumchlorid, Behenyltrimethylammoniumbromid, Deodecylbenzyldimethylammoniumchlorid, Trimethylbenzylammoniummethosulfat und Trimethylbenzylammoniumchlorid.

Weitere Beispiele für kationische Emulgatoren sind alle bekannten quartären Imidazoliniumverbindungen, die mindestens einen substituierten oder unsubstituierten Kohlenwasserstoffrest mit mindestens 10 Kohlenstoffatomen tragen, wie 1-Methyl-2-stearyl-3-stearylamidoethyl-imidazolinium methosulfat, 1-Methyl-2-norstearyl-3-stearyl-amidoethylimidazolinium-methosulfat, 1-Methyl-2-oleyl-3-oleylamidoethylimidazolinium-methosulfat, 1-Methyl-2-stearyl-3-methylimidazolinium-methosulfat, 1-Methyl-2-behenyl-3-methylimidazolinium-methosulfat und 1-Methyl-2-dodecyl-3-methylimidazolinium-methosulfat.

Beispiele für anionische Emulgatoren sind Alkylsulfate, Alkylsulfonate, Alkylbenzolsulfonate, Alkylphosphate, Alkylphosphonate und Alkylsulfosuccinate.

Vorzugsweise werden als Emulgatoren (C) in den erfindungsgemäßen Mischungen nichtionogene Emulgatoren eingesetzt.

Beispiele für die in den erfindungsgemäßen Mischungen eingesetzten nichtionogenen Emulgatoren (C) sind Sorbitanfettsäureester, ethoxylierte Sorbitanfettsäureester, ethoxylierte Fettsäuren, ethoxylierte lineare oder verzweigte Alkohole mit 10 bis 20 Kohlenstoffatomen, ethoxylierte Alkylphenole, Pentaerythritfettsäurester, Glycerinester und Alkylpolyglycoside.

Bevorzugt handelt es sich bei den nichtionogenen Emulgatoren (C) um Sorbitanfettsäureester, ethoxylierte Sorbitanfettsäureester, ethoxylierte Fettsäuren, ethoxylierte lineare oder verzweigte Alkohole mit 10 bis 20 Kohlenstoffatomen und ethoxylierte Triglyceride.

Vorzugsweise enthalten die erfindungsgemäßen Dispersionen keine ethoxylierten Alkylphenole, da diese bekannterweise nicht umweltverträglich sind.

Vorzugsweise werden als Komponente (C) Mischungen von nichtionogenen Emulgatoren eingesetzt, von denen mindestens ein Emulgator einen HLB-Wert größer oder gleich 12 hat. Dabei beträgt der Anteil an Emulgatoren mit einem HLB-Wert größer oder gleich 12 im Emulgatorgemisch (C) bevorzugt mindestens 30 Gew.-%.

Der HLB-Wert ist Ausdruck des Gleichgewichts zwischen hydrophilen und hydrophoben Gruppen eines Emulgators. Die Definition des HLB-Werts sowie Verfahren zu deren Ermittlung sind allgemein bekannt und z.B. in Journal of Colloid and Interface Science 298 (2006) 441-450 sowie der dort zitierten Literatur beschrieben.

Beispiele für die eingesetzten nichtionogenen Emulgatoren (C) mit einem HLB-Wert von größer oder gleich 12 sind (HLB-Werte laut Hersteller, POE steht für Polyoxyethylen):

| Chemische Bezeichnung | HLB-Wert | Hersteller (Bsp.) | Handelsname |
|---|---|---|---|
| POE(20)Sorbitanmonostearat | 14,9 | Croda¹⁾ | Tween® 60 |
| POE(20)Sorbitanmonooleate | 15,0 | Croda¹⁾ | Tween® 80 |
| POE(20)Sorbitanmonolaurat | 16,7 | Croda¹⁾ | Tween® 20 |
| POE(200)Rizinusöl | 18,1 | Croda¹⁾ | Etocas® 200 |
| POE(40)Stearat | 16,9 | Croda¹⁾ | Myrj® 52 |
| POE(23)laurylether | 16,9 | Croda¹⁾ | Brij® L23 |
| POE(10)isotridecylether | 13,7 | Sasol²⁾ | Marlipal® O13/100 |
| POE(12)isotridecylether | 14,5 | Sasol²⁾ | Marlipal® O13/120 |
| POE(16)isotridecylether | 15,6 | BASF³⁾ | Arlypon® IT 16 |

| | | | |
|---|---|---|---|
| ¹⁾Croda International Plc, Cowick Hall, Snaith Goole East Yorkshire UK; ²⁾Sasol Germany GmbH, D-Marl; ³⁾BASF SE, D-Ludwigshafen. | | | |

Beispiele für einsetzbare nichtionogene Emulgatoren mit einem HLB-Wert < 12 sind (HLB-Werte laut Hersteller bzw. Tabelle 3 in oben genannter Quelle, POE steht für Polyoxyethylen):

| Chemische Bezeichnung | HLB-Wert | Hersteller (Bsp.) | Handelsname |
|---|---|---|---|
| Sorbitanmonostearat | 4,7 | Croda¹⁾ | Span® 60 |
| Sorbitanmonooleate | 4,3 | Croda¹⁾ | Span® 80 |
| Sorbitanmonolaurat | 8,6 | Croda¹⁾ | Span® 20 |
| POE (4) laurylether | 9,7 | Croda¹⁾ | Brij® L4 |
| POE(6)isotridecylether | 11,4 | Sasol²⁾ | Marlipal® O13/60 |
| POE(5)isotridecylether | 10,5 | BASF³⁾ | Lutensol® TO5 |
| POE (4) stearylether | 7,5 | BASF³⁾ | Arlypon® SA 4 |

| | | | |
|---|---|---|---|
| ¹⁾Croda International Plc, Cowick Hall, Snaith Goole East Yorkshire UK; ²⁾Sasol Germany GmbH, D-Marl; ³⁾BASF SE, D-Ludwigshafen. | | | |

Die erfindungsgemäßen Dispersionen enthalten Komponente (C) vorzugsweise in Mengen von 1 bis 50 Gewichtsteilen, besonders bevorzugt von 2 bis 10 Gewichtsteilen, jeweils bezogen auf 100 Gewichtsteile des Gesamtgewichts an Komponente (A) und Komponente (B).

Als Wasser (D) können alle Arten von Wässer eingesetzt werden, die auch bisher zur Herstellung von Dispersionen eingesetzt wurden.

Als Wasser (D) wird vorzugsweise teil- oder vollentsalztes Wasser, destilliertes oder (mehrfach) redestilliertes Wasser, Wässer für medizinische oder pharmazeutische Zwecke, wie z.B. gereinigtes Wasser (Aqua purificata gemäß Pharm. Eur.) eingesetzt.

Das erfindungsgemäß eingesetzte Wasser (D) hat vorzugsweise eine Leitfähigkeit von weniger als 50 µS/cm, besonders bevorzugt weniger als 10 µS/cm, insbesondere weniger als 1,3 µS/cm, jeweils bei 20°C und 1013 hPa.

Die erfindungsgemäßen Dispersionen enthalten Wasser (D) vorzugsweise in Mengen von 10 bis 200 Gewichtsteilen, besonders bevorzugt von 20 bis 100 Gewichtsteilen, jeweils bezogen auf 100 Gewichtsteile des Gesamtgewichts an Komponente (A) und Komponente (B).

In den erfindungsgemäßen Dispersionen stellt Wasser (D) bevorzugt die kontinuierliche Phase dar.

Beispiele für gegebenenfalls eingesetzte Katalysatoren (E) sind alle bisher bekannten metallfreien Kondensationskatalysatoren, wie Säuren, wie z.B. Carbonsäuren, Dicarbonsäuren, Organophosphorsäure und ihre Mono und Di-Ester, Phosphonsäuren und ihre Monoester und Diorganophosphinsäuren, Borsäure, Ammoniumsalze und Anhydride von Carbonsäuren; Basen, wie z.B. Alkali- und Erdalkalihydroxid; organische Stickstoffverbindungen, wie z.B. Triorganyloxyamine, Monoorganylamine, Diorganylamine (auch cyclische Systeme wie Piperidin, Piperazin, Pyrrolidin, Homopiperazin und 7-Azabicyclo[2.2.1]heptan), Triorganylamine (auch cyclische Systeme wie DABCO (1,4-Diazabicyclo[2.2.2]octan), 4,5-Dihydro-1H-imidazol, 2-Organyl-4,5-dihydro-1H-imidazole) sowie Organylamidine (auch cyclische Systeme wie 1,4,5,6-Tetrahydropyrimidin, 2-Organyl-1,4,5,6-Tetrahydropyrimidine, 1,5-Diazabicyclo[4.3.0]non-5-en, 1,8-Diazabicyclo[5.4.0]undec-7-en, 1,5,7-Triazabicyclo[4.4.0]dec-5-en, 7-Methyl-1,5,7-triazabicyclo(4.4.0)dec-5-en), Aminomethanamidin, 1-Methylguanidin, N,N'-Dimethylguanidin, N,N,N',N'-Tetramethylguanidin, N,N,N',N'-Tetramethyl-N''-aryl-guanidine, N,N,N',N'-Tetramethyl-N"-[4-morpholinyl(phenylimino)methyl]guanidin, 1-Methyl-3-nitroguanidin, 1,8-Bis(tetramethylguanidino)naphthalin, Biguanid und 1-Methylbiguanid sowie Salze der genannten Säuren mit den genannten organischen Stickstoffverbindungen.

Bevorzugt handelt es sich bei dem gegebenenfalls eingesetzten Katalysator (E) um Carbonsäuren, Dicarbonsäuren, Organophosphorsäure und ihre Mono- und Diester, Phosphonsäuren und ihre Monoester sowie Diorganophosphinsäuren, um organische Stickstoffverbindungen, wie z.B. Triorganyloxyamine, Monoorganylamine, Diorganylamine, Amidine und Guanidine, oder um Salze der genannten Säuren mit den genannten Stickstoffverbindungen.

Besonders bevorzugt handelt es sich bei dem gegebenenfalls eingesetzten Katalysator (E) um organische Stickstoffverbindungen.

Die gegebenenfalls eingesetzten Katalysatoren (E) haben eine Löslichkeit in vollentsalztem Wasser mit einer Leitfähigkeit von weniger als 1,3 µS/cm von bevorzugt mindestens 0,1 g pro 100 g Wasser, besonders bevorzugt mindestens 1 g pro 100 g Wasser, jeweils bei 20°C und 1013 hPa.

Insbesondere sind als gegebenenfalls eingesetzte Katalysatoren (E) organische Stickstoffverbindungen bevorzugt, deren 0,1 Gew.-%ige Lösung in vollentsalztem Wasser mit einer Leitfähigkeit von weniger als 1,3 µS/cm einen pH-Wert größer 7 hat.

Die gegebenenfalls eingesetzten organischen Stickstoffverbindungen (E) haben einen n-Octanol/Wasser-Verteilungskoeffizienten K_{ow} von bevorzugt <1 bei 20°C und 1013 hPa. Die Bestimmung des K_{ow}-Wertes ist allgemein bekannt. Hierzu wird auf J. Sangster, Octanol-Water Partition Coefficients: Fundamentals and Physical Chemistry, Vol. 2 of Wiley Series in Solution Chemistry, John Wiley & Sons, Chichester, 1997, verwiesen. Die Bestimmung erfolgt nach der shake-flask-methode (Seite 57 ff.), zur Analyse des Gehalts der zu bestimmenden Substanz wird die Säure-Base-Titration verwendet.

Falls die erfindungsgemäßen Massen Katalysatoren (E) enthalten, handelt es sich um Mengen von vorzugsweise 0,001 bis 2 Gewichtsteilen, besonders bevorzugt _{0,01} bis 2 Gewichtsteilen, insbesondere _{0,01} bis 1 Gewichtsteilen, jeweils bezogen auf 100 Gewichtsteile des Gesamtgewichts an Komponente (A) und Komponente (B). Die erfindungsgemäßen Massen enthalten bevorzugt Katalysator (E).

Bei den erfindungsgemäß gegebenenfalls eingesetzten Füllstoffen (F) kann es sich um beliebige, bisher bekannte Füllstoffe handeln.

Beispiele für Füllstoffe (F) sind Quarzpulver, Quarzgranulat, geschmolzene Quarzpulver, Quarzglaspulver, Glaspulver, Diatomeenerde, Silikate, Calciumsilikat, Magnesiumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Carbonate, wie Calciumcarbonat (gefällt oder gemahlen; Kreide, Kalkstein, Marmor), Magnesiumcarbonat und Calciummagnesiumcarbonat (Dolomit), pyrogen hergestellte Kieselsäure, gefällte Kieselsäure, Aluminiumtrihydroxid, Magnesiumhydroxid, faserförmige Füllstoffe, wie Wollastonit, Montmorrillonit, Bentonit sowie geschnittene und/oder gemahlene Fasern aus Glas (Glaskurzfasern), Mineralwolle oder Kunststoff.

Bevorzugt handelt es sich bei den gegebenenfalls eingesetzten Füllstoffen (F) um Quarzpulver, Quarzglaspulver, Glaspulver, Diatomeenerde, Talkum, Kaolin, Zeolithe, Metalloxidpulver, wie Aluminium-, Titan-, Eisen- oder Zinkoxide bzw. deren Mischoxide, Bariumsulfat, Carbonate, wie Calciumcarbonat (gefällt oder gemahlen, aus natürlichen Quellen wie Kreide, Kalkstein, Marmor), Magnesiumcarbonat und Calciummagnesiumcarbonat (Dolomit), faserförmige Füllstoffe, wie Wollastonit, Montmorrillonit, Bentonit sowie geschnittene und/oder gemahlene Fasern aus Glas (Glaskurzfasern), Mineralwolle oder Kunststoff, wobei Quarzpulver, Talkum, Kaolin, Zinkoxid, Bariumsulfat, Carbonate, wie Calciumcarbonat (gefällt oder gemahlen, aus natürlichen Quellen wie Kreide, Kalkstein, Marmor), Magnesiumcarbonat und Calciummagnesiumcarbonat (Dolomit), faserförmige Füllstoffe, wie Wollastonit, Montmorrillonit, Bentonit sowie geschnittene und/oder gemahlene Fasern aus Glas (Glaskurzfasern), Mineralwolle oder Kunststoff besonders bevorzugt sind.

Die erfindungsgemäß gegebenenfalls eingesetzten Füllstoffe (F) haben eine mittlere Korngröße D50 von bevorzugt 0,1 µm bis 250 µm, besonders bevorzugt 0,1 µm bis 25 µm.

Die Analyse der Partikelgrößenverteilung der Füllstoffe im Bereich von etwa 0,02 bis 500 µm wird bevorzugt mit einem CILAS 1064 PARTICLE SIZE ANALYZER der Firma Cilas durchgeführt.

Falls die erfindungsgemäßen Dispersionen Füllstoffe (F) enthalten, handelt es sich um Mengen von vorzugsweise 10 bis 150 Gewichtsteilen, besonders bevorzugt 10 bis 90 Gewichtsteilen, insbesondere 10 bis 50 Gewichtsteilen, jeweils bezogen auf 100 Gewichtsteile des Gesamtgewichts an Komponente (A) und Komponente (B). In einer weiteren bevorzugten Variante sind Füllstoffe (F) enthalten in Mengen von vorzugsweise 500 bis 1800 Gewichtsteilen, besonders bevorzugt 600 bis 1400 Gewichtsteilen, jeweils bezogen auf 100 Gewichtsteile des Gesamtgewichts an Komponente (A) und Komponente (B). Die erfindungsgemäßen Dispersionen enthalten bevorzugt Füllstoffe (F).

Bei den in den erfindungsgemäßen Dispersionen gegebenenfalls eingesetzten Additiven (G) kann es sich um alle Zusatzstoffe handeln, die auch bisher in wässrigen Dispersionen eingesetzt wurden, wie z.B. Pigmente, Farb- oder Duftstoffe, Stabilisatoren, Verlaufshilfsmittel, Lichtschutzmittel und Konservierungsmittel, wobei der Zusatz von Lichtschutzmitteln und Konservierungsmitteln bevorzugt ist.

Beispiele für gegebenenfalls eingesetzte Konservierungsmittel (G) sind Methylisothieazolinon, Chlormethylisothiazolinon, Benzylisothiazolinon, Phenoxyethanol, Methylparaben, Ethylparaben, Propylparaben, Butylparaben, Isobutylparaben, Alkalibenzoate, Alkalisorbate, Iodopropynylbutylcarbamat, Benzylalkohol und 2-Brom-2-nitropropan-1,3-diol.

Beispiele für gegebenenfalls eingesetzte Lichtschutzmittel (G) sind Antioxidantien, UV-Stabilisatoren, wie z. B. sog. "HALS-Verbindungen", UV-Absorber, wie solche aus der Gruppe der Benzotriazole.

Falls die erfindungsgemäßen Dispersionen Additive (G) enthalten, können die Einsatzmengen je nach Art des Additivs und der Anwendung der erfindungsgemäßen Dispersionen in weiten Bereichen variieren. Bevorzugt handelt es sich um Mengen von 0,0005 bis 2 Gewichtsteilen, bezogen auf 100 Gewichtsteile des Gesamtgewichts an Komponente (A) und Komponente (B). Falls es sich bei den Additiven (G) um Verlaufshilfsmittel, wie 2,2,4-Trimethyl-1,3-pentandiolmonoisobutyrat, handelt können in einer weiteren bevorzugten Variante Mengen von 50 bis 150 Gewichtsteile, bezogen auf 100 Gewichtsteile des Gesamtgewichts an Komponente (A) und Komponente (B), bevorzugt sein. Die erfindungsgemäßen Dispersionen enthalten bevorzugt Additive (G).

Bevorzugt handelt es sich bei den erfindungsgemäßen Dispersionen um solche enthaltend,
jeweils bezogen auf 100 Gewichtsteile des Gesamtgewichts an Komponenten (A) und (B),
2 bis 10 Gewichtsteile Komponente (C),
20 bis 100 Gewichtsteile Komponente (D),
10 bis 50 Gewichtsteile Komponente (F),
gegebenenfalls 0,001 bis 2 Gewichtsteile Komponente (E) und
gegebenenfalls 0,0005 bis 2 Gewichtsteile Komponente (G) ausgewählt aus Konservierungsmitteln und Lichtschutzmitteln,
mit der Maßgabe, dass das Gewichtsverhältnis von Komponente (B) zu Komponente (A) im Bereich von 0,1:1 bis 1:1 liegt.

Diese Dispersionen können bevorzugt als Fassadenfarben eingesetzt werden.

Des Weiteren bevorzugt handelt es sich bei den erfindungsgemäßen Dispersionen um solche enthaltend,
jeweils bezogen auf 100 Gewichtsteile des Gesamtgewichts an Komponenten (A) und (B),
2 bis 10 Gewichtsteilen Komponente (C),
20 bis 100 Gewichtsteilen Komponente (D),
600 bis 1400 Gewichtsteile Komponente (F),
gegebenenfalls 0,001 bis 2 Gewichtsteile Komponente (E) und
gegebenenfalls 0,0005 bis 2 Gewichtsteile (G) ausgewählt aus Konservierungsmitteln,
mit der Maßgabe, dass das Gewichtsverhältnis von Komponente (B) zu Komponente (A) 1:1 bis 10:1 beträgt.

Diese Dispersionen können bevorzugt als Fugenmörtel eingesetzt werden.

Die erfindungsgemäßen Dispersionen enthalten außer den Komponenten (A), (B), (C) und (D) sowie gegebenenfalls (E), (F) und (G) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Dispersionen handelt es sich bevorzugt um Öl-in-Wasser-Emulsionen oder um Dispersionen, die auf Öl-in-Wasser-Emulsionen basieren.

Die erfindungsgemäßen Dispersionen sind mit Wasser in beliebigen Verhältnissen verdünnbar.

Die erfindungsgemäßen Dispersionen können nach beliebigen und bisher bekannten Verfahren hergestellt werden.

Ein weiterer Gegenstand der vorliegenden Erfindung ist ein Verfahren zur Herstellung der erfindungsgemäßen Dispersionen durch Mischen der Komponenten (A), (B) sowie gegebenenfalls (C) und weiteren Komponenten und anschließendem Emulgieren der erhaltenen Mischung durch Zugabe von Wasser (D) sowie gegebenenfalls Komponenten (C) und gegebenenfalls weiteren Komponenten, mit der Maßgabe, dass Komponente (C) eingesetzt wird.

In einer bevorzugten Ausführungsform des erfindungsgemäßen Verfahrens werden zunächst die Komponenten (A), (B) und (C) miteinander vermischt und dann die erhaltene Mischung durch Zugabe von Wasser (D) emulgiert, wobei Wasser (D) bevorzugt die kontinuierliche Phase darstellt.

In einer weiteren bevorzugten Ausführungsform des erfindungsgemäßen Verfahrens werden Komponenten (A) und (B) miteinander vermischt und dann eine Mischung aus Komponenten (C) und (D) sowie gegebenenfalls weiteren Komponenten zugegeben und anschließend emulgiert, wobei Wasser (D) bevorzugt die kontinuierliche Phase darstellt.

Bei dem erfindungsgemäßen Verfahren werden die optionalen Bestandteile bevorzugt nach dem Herstellen der Dispersion aus Komponenten (A), (B), (C) und (D), bei der es sich bevorzugt um eine Öl-in-Wasser-Emulsion handelt, zugegeben. Die optionalen Bestandteile können aber auch mit Wasser (D) vermischt zugegeben werden.

Bei einer besonders bevorzugten Ausführungsform des erfindungsgemäßen Verfahrens werden

### in einem 1. Schritt

Komponenten (A) und (B) durch Rühren und/oder Homogenisieren vermischt,

### in einem 2. Schritt

zu der im 1. Schritt erhaltenen Mischung Komponenten (C) und (D) zugegeben und durch schnelles Rühren eine Emulsion hergestellt,
gegebenenfalls in einem 3. Schritt
weiteres Wasser (D) zugegeben und
gegebenenfalls in einem 4. Schritt
weitere Stoffe, wie z.B. ausgewählt aus Komponenten (E), (F) und (G), eingemischt, die gegebenenfalls mit weiterem Wasser (D) vorgemischt sind.

Im ersten Schritt des erfindungsgemäßen Verfahrens werden die Komponenten (A) und (B) durch Rühren, bevorzugt in handelsüblichen Mischaggregaten mit Flügel-, Anker- oder Planetenrührern, Dissolverscheiben oder Zentrifugalmischern, miteinander vermischt.

Im zweiten Schritt des erfindungsgemäßen Verfahrens wird die Mischung von (A) und (B) mit den weiteren Komponenten (C) und (D) durch Rühren und/oder Homogenisieren, z.B. in beliebiger Reihenfolge, miteinander vermischt, wobei die Umfangsgeschwindigkeit des Rührers und/oder Rotor-Stator Homogenisators bevorzugt größer als 5 m/s, besonders bevorzugt größer als 10 m/s, insbesondere 5 bis 50 m/s, ist. Bevorzugt wird im zweiten Schritt die Mischung von (A) und (B) zunächst mit Komponente (C) gemischt und dann portionsweise Wasser (D) unter starkem Mischen zugegeben.

Die im zweiten Schritt des erfindungsgemäßen Verfahrens erhaltene Emulsion ist bevorzugt eine Öl-in-Wasser-Emulsion.

Vorzugsweise ist die im zweiten Schritt erhaltene Emulsion aus Komponenten (A), (B), (C) und (D) hochviskos und nicht fließfähig. Vorzugsweise wird dabei nur eine Teilmenge von Wasser (D) verwendet. Besonders bevorzugt wird im zweiten Schritt soviel Wasser (D) eingesetzt, dass die Fließgrenze (entsprechend DIN 53019-1 und zitierten Normen) der im zweiten Schritt erhaltenen Emulsion größer als 10 Pa, vorzugsweise größer als 100 Pa, insbesondere größer als 1000 Pa ist.

Der zweite Schritt des erfindungsgemäßen Verfahrens wird bei Temperaturen von vorzugsweise 5 bis 80°C, insbesondere 10 bis 50°C, und dem Druck der umgebenden Atmosphäre, also zwischen 900 und 1100 hPa, oder bei einem erhöhten Druck von bis zu 20000 hPa, insbesondere von bis zu 10000 hPa, durchgeführt.

Bevorzugt beträgt die Dauer des erfindungsgemäßen zweiten Schrittes weniger als 4 Stunden, besonders bevorzugt weniger als 2 Stunden, insbesondere 5 bis 60 Minuten.

Die im zweiten Schritt des erfindungsgemäßen Verfahrens erhaltene Mischung hat eine Partikelgröße (Mittelwert der Volumenverteilung) von bevorzugt kleiner als 5 µm, besonders bevorzugt 0,1 bis 1 µm. Die Partikelgröße wird dabei bevorzugt mit einem Malvern Mastersizer® 2000 oder 3000 nach ISO 13320:2009 bestimmt, wobei die Auswertung nach der Mie-Theorie mit einem Brechungsindex des Partikels von 1,390, einem Brechungsindex des Mediums von 1,330 und einer Absorptionskonstante von 0,01 erfolgt.

Im gegebenenfalls durchgeführten dritten Schritt des erfindungsgemäßen Verfahrens wird die im zweiten Schritt erhaltene Emulsion, insbesondere wenn sie hochviskos bis standfest ist, mit weiterem Wasser (D) unter Rühren und/oder Homogenisieren verdünnt, so dass eine fließfähige Emulsion gebildet wird, die vorzugsweise mehr als 30 Teile Wasser (D), je 100 Gewichtsteile des Gesamtgewichts an Komponente (A) und Komponente (B), enthält.

Im gegebenenfalls durchgeführten vierten Schritt werden dann weitere Komponenten, ausgewählt aus Komponenten (E), (F) und (G), zugegeben, die jeweils auch mit (D) vorgemischt worden sein können.

Das Rühren bzw. Homogenisieren im dritten und im vierten Schritt kann unter den gleichen Bedingungen erfolgen wie für den ersten Schritt beschrieben, wie etwa mit einfachen, langsam laufenden Mischern.

Der erste Schritt des erfindungsgemäßen Verfahrens wird bei Temperaturen von vorzugsweise 5 bis 100°C, insbesondere 10 bis 70°C, und dem Druck der umgebenden Atmosphäre, also zwischen 900 und 1100 hPa, oder bei einem vermindertem Druck bis zu 10 hPa, insbesondere von bis zu 100 hPa, durchgeführt.

Der zweite Schritt des erfindungsgemäßen Verfahrens wird bei einem Druck der umgebenden Atmosphäre, also bei etwa 1010 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

Der gegebenenfalls durchgeführte dritte und vierte Schritt des erfindungsgemäßen Verfahrens wird jeweils unabhängig voneinander bei Temperaturen von vorzugsweise 5 bis 50°C, insbesondere 10 bis 30°C, und dem Druck der umgebenden Atmosphäre, also zwischen 900 und 1100 hPa, durchgeführt. Der dritte und vierte Schritt kann in dem gleichen Behälter erfolgen wie der zweite Verfahrensschritt.

Bevorzugt beträgt die Dauer des erfindungsgemäß gegebenenfalls durchgeführten dritten Schrittes weniger als 4 Stunden, besonders bevorzugt weniger als 2 Stunden, insbesondere 5 bis 60 Minuten.

Beim erfindungsgemäßen Verfahren wird bevorzugt der dritte Schritt durchgeführt.

Beim erfindungsgemäßen Verfahren wird bevorzugt der vierte Schritt durchgeführt.

Beim erfindungsgemäßen Verfahren werden bevorzugt der dritte und der vierte Schritt durchgeführt.

Die einzelnen Schritte des erfindungsgemäßen Verfahrens können jeweils einzeln kontinuierlich, diskontinuierlich oder semikontinuierlich durchgeführt werden, wobei auch einzelne Schritte in einer kontinuierlichen Fahrweise miteinander kombiniert werden können.

Die erfindungsgemäßen Dispersionen sind bevorzugt milchig weiß oder je nach Füllstoff und Pigment auch farbig.

Die Konsistenz der erfindungsgemäßen Dispersionen kann in weiten Bereichen variieren und reicht von dünnflüssig bis hochviskos pastös, oder sogar kittähnlich.

Die erfindungsgemäßen Dispersionen haben einen pH-Wert von bevorzugt 4 bis 8, besonders bevorzugt 4 bis 6.

Die erfindungsgemäßen Dispersionen haben Festgehalte von 45 bis 90 Gew.-%.

Die Festgehalte werden bevorzugt dadurch hergestellt, dass in ein zylindrisches Metallgefäß mit glattem Boden mit einem Durchmesser von 30 mm und einer Höhe von 40 mm etwa 2 g der zu vermessenden Probe auf 0,0001 g genau eingewogen werden. Das Metallgefäß wird dann für 2 Stunden bei 105 °C und dem Druck der umgebenden Atmosphäre, also 900 bis 1100 hPa, in einem Trockenschrank gelagert. Nach Ablauf der Wärmelagerung wird die Probe aus dem Trockenschrank genommen und in einem leeren Exsikkator auf Raumtemperatur abgekühlt. Anschließend wird die Probe wiederum verwogen mit einer Genauigkeit von 0,0001 g. Der Feststoffgehalt ist der Quotient aus der Auswaage geteilt durch die Einwaage, ausgedrückt in Gew.-%.

Die erfindungsgemäßen Dispersionen härten schon bei Raumtemperatur innerhalb kurzer Zeit nach ganzem oder teilweisem Entfernen, vorzugsweise Verdampfen, des Wassers, zu Elastomeren aus. Die Aushärtung kann auch dadurch beschleunigt werden, dass das Wasser von einem saugfähigen bzw. hygroskopen Substrat, wie z.B. Holz oder poröse mineralische Stoffe, wie beispielsweise Ziegel, aufgesaugt wird.

Ein weiterer Gegenstand der Erfindung sind Formkörper hergestellt durch Vernetzung der erfindungsgemäßen Dispersionen, nachdem das Wasser ganz oder teilweise entfernt wurde.

Bei den erfindungsgemäßen Formkörpern handelt es sich bevorzugt um Beschichtungen oder Dichtungsmassen, insbesondere mit hohen Biegefestigkeiten aber nur geringer Dehnungsfähigkeit.

Bei den erfindungsgemäßen Beschichtungen handelt es sich bevorzugt um hochelastische Membranen, die zum Abdichten von porösen Baustoffen wie Beton dienen können oder zum Verschließen und Überbrücken von Rissen in Baustoffen wie Beton hergenommen werden können.

Die erfindungsgemäßen Formkörper werden bevorzugt dadurch hergestellt, dass die erfindungsgemäße Dispersion auf die Oberfläche eines Substrats aufgebracht wird, z.B. die eines mineralischen Baustoffs, und das Wasser verdunsten gelassen wird, wodurch die Aushärtung in Gang gesetzt wird.

Die erfindungsgemäßen Dispersionen können überall dort eingesetzt werden, wo auch bisher Dispersionen auf der Basis von Siloxanen verwendet worden sind, wie beispielsweise als Anstriche für Bauanwendungen, insbesondere Wandfarben und Fußbodenfarben, Dicht- und Spachtelmassen, insbesondere Fugenmörtel.

Die erfindungsgemäßen Dispersionen haben den Vorteil, dass sie auf vielen Substraten, wie z.B. mineralischen Baustoffen wie Beton, Mörtel, Kunststeinen und Klinker, sowie Fließen und Glas, Kunststoffen und Holz, gut haften. Die Beschichtung kann dabei durch bekannte Verfahren, wie beispielsweise Streichen, Walzen, Tauchen oder Spritzen, erfolgen. Die Formkörper können z.B. hergestellt werden, indem die erfindungsgemäßen Dispersionen durch Spachteln in einen Zwischenraum zwischen zwei Baustoffen, z.B. Fließen, eingebracht werden, woran sich die Aushärtung, durch Verdunstung des Wassers ausgelöst, anschließt.

Als bevorzugtes Einsatzgebiet bieten sich die Verwendung der erfindungsgemäßen Dispersionen als Dichtungsmassen und Beschichtungsmaterialien an. Als Beispiele seien Fugendichtmassen in Gebäuden im Innen- und Außenbereich genannt, insbesondere der Einsatz als Dichtungsmassen bzw. Fugenmörtel im Sanitär- und Küchenbereich. Beispiele für Beschichtungen sind u.a. Fassadenbeschichtungen- und -imprägnierungen, elastische Fassadenfarben, Textil- und Gewebebeschichtungen.

Die erfindungsgemäßen Dispersionen haben den Vorteil, dass sie einfach und preiswert herstellbar sind.

Des Weiteren haben die erfindungsgemäßen Dispersionen den Vorteil, dass sie toxikologisch unbedenklich und mit vielen Untergründen gut verträglich sind.

Die erfindungsgemäßen Dispersionen haben ferner den Vorteil, dass sie auf vielen Untergründen gut haften und Formkörper mit hydrophoben Eigenschaften ergeben, die dennoch jederzeit wieder mit den gleichen Dispersionen benetzt werden können. Damit ist unter anderem eine jederzeitige Überstreichbarkeit der Formkörper mit wässrigen Dispersionen möglich, was in der Praxis einen wesentlichen Vorteil darstellt.

Die erfindungsgemäßen Dispersionen haben den Vorteil, dass die mechanischen Eigenschaften der damit hergestellten Formkörper in weiten Grenzen leicht eingestellt werden können.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

### Beispiele

**Silylterminierter Polyether 1:** α,ω-Dimethoxymethylsilylmethylcarbamat-terminiertes Polypropylenglycol mit einem mittleren Molgewicht Mn von ca. 18 500 g/mol, erhältlich unter der Bezeichnung **GENIOSIL® STP-E30** bei der Wacker Chemie AG, D-München;
**Silylterminierter Polyether 2:** α,ω-Dimethoxymethylsilylmethylcarbamat-terminiertes Polypropylenglycol mit einem mittleren Molgewicht Mn von ca. 12 500 g/mol, erhältlich unter der Bezeichnung **GENIOSIL® STP-E10** bei der Wacker Chemie AG, D-München;
**Siloxanharz 1:** (PhSiO_{3/2})_{0,24}(PhSiO_{2/2}(OCH₃)_{0,52}(PhSiO_{1/2}(OCH₃)₂)_{0,24} mit Mw = 986 g/mol, Mn = 765 g/mol und Mw/Mn = 1,29;
**Siloxanharz 2:** (MeSiO_{3/2})_{0,33}(MeSi(OH)O_{2/2})_{0,05}(MeSi(OEt)O_{2/2})_{0,01} (Me₂SiO_{2/2})_{0,06}(PhSiO_{3/2})_{0,24}(PhSi(OH)O_{2/2})_{0,28}(PhSi(OEt)O_{2/2})_{0,03} mit Mw = 3250 g/mol, Mn = 1300 g/mol und Mw/Mn = 2,5;
**Siloxanharz 3:** (MeSiO_{3/2})_{0,33}(MeSi(OH)O_{2/2})_{0,04}(MeSi(OEt)O_{2/2})_{0,02} (Me₂SiO_{2/2})_{0,06}(PhSiO_{3/2})_{0,34}(PhSi(OH)O_{2/2})_{0,17}(PhSi(OEt)O_{2/2})_{0,04} mit Mw = 2920 g/mol, Mn = 1450 g/mol und Mw/Mn = 2,0;
**Siloxanharz 5:** (MeSiO_{3/2})₀,₂₂(i-OctSiO_{3/2})_{0,05}(MeSi(OH)O_{2/2})_{0,01} (MeSi(OMe)O_{2/2})_{0,33}(i-OctSi(OMe)O_{2/2})_{0,11}(MeSi(OMe)₂O_{1/2})_{0,20} (i-OctSi (OMe)₂O_{1/2})_{0,08} mit Mw = 1500 g/mol, Mn = 650 g/mol und Mw/Mn = 2,3;
**Siloxanharz 6:** (MeSiO_{3/2})_{0,10}(MeSi(OMe)O_{2/2})_{0,17}(MeSi(OMe)₂O_{1/2})_{0,03} (PhSiO_{3/2})_{0,15}(PhSi(OMe)O_{2/2})₀,₃₁(PhSi(OMe)₂O_{1/2})_{0,20}(Me₂SiO_{2/2})_{0,04} mit Mw = 1800 g/mol, Mn = 900 g/mol und Mw/Mn= 2,0.

### I) Herstellung der Mischungen aus einem silylterminierten Polyether der Formel (I) (Komponente (A)) und einer Siliciumverbindung enthaltend Einheiten der Formel (II) (Komponente (B))

### Beispiel 1.1

150 g des bei 25°C flüssigen Siloxanharzes 1 wurden mit 150 g silylterminiertem Polyether 1 bei 680 min⁻¹ in einem Planetenmischer LPV1 der Firma PC-Laborsystem mit einem Balkenrührer als Rührwerkzeug für 10 min unter vermindertem Druck bei 100 mbar gemischt. Diese Mischung wurde in eine feuchtigkeitsdichte Flasche abgefüllt.

### Beispiele 1.2 bis 1.5

Der Versuch gemäß Beispiel 1.1 wurde wiederholt. Anstelle der in Beispiel 1.1 angegebenen Mengen der Einsatzstoffe wurden die in Tabelle 1 zusammengestellten Mengen verwendet.

### Beispiele 1.6 bis 1.11

Der Versuch gemäß Beispiel 1.1 wurde wiederholt. Anstelle des silylterminierten Polyethers 1 wurde silylterminierter Polyether 2 eingesetzt. Die verwendeten Mengen der Einsatzstoffe sind in Tabelle 1 zusammengestellt.

**Tabelle 1:**

| Beispiel | Siloxanharz 1 | silylterminierter Polyether 1 | silylterminierter Polyether 2 |
|---|---|---|---|
| 1.2 | 120 g | 180 g | |
| 1.3 | 90 g | 210 g | |
| 1.4 | 60 g | 240 g | |
| 1.5 | 30 g | 270 g | |
| 1.6 | 210 g | | 90 g |
| 1.7 | 150 g | | 150 g |
| 1.8 | 120 g | | 180 g |
| 1.9 | 90 g | | 210 g |
| 1.10 | 60 g | | 240 g |
| 1.11 | 30 g | | 270 g |

### Beispiele 1.13 bis 1.17

Der Versuch gemäß Beispiel 1.1 wurde wiederholt. Anstelle des Siloxanharzes 1 wurde das bei 25°C feste Siloxanharz 2 verwendet. Bei diesen Versuchen wurde der Planetenmischer LPV1 mit dem Butterfly-Rührwerkzeug versehen. Die Rohstoffe wurden unter Rühren bei 680 min⁻¹ und unter vermindertem Druck bei 100 mbar auf 60°C erwärmt. Nach Erreichen der 60°C wurde die Temperatur für 5 min bei 100mbar gehalten. Die verwendeten Mengen der Einsatzstoffe sind in Tabelle 2 zusammengestellt.

### Beispiele 1.19 bis 1.23

Die Versuche gemäß den Beispielen 1.13 bis 1.17 wurden wiederholt. Anstelle des silylterminierten Polyethers 1 wurde silylterminierter Polyether 2 eingesetzt. Die verwendeten Mengen der Einsatzstoffe sind in Tabelle 2 zusammengestellt.

### Beispiele 1.24 bis 1.26

Die Versuche gemäß den Beispielen 1.19 bis 1.23 wurden wiederholt. Anstelle des Siloxanharzes 2 wurde das feste Siloxanharz 3 eingesetzt. Die verwendeten Mengen der Einsatzstoffe sind in Tabelle 2 zusammengestellt.

**Tabelle 2:**

| Beispiel | Siloxanharz 2 | Siloxanharz 3 | silylterminierter Polyether 1 | silylterminierter Polyether 2 |
|---|---|---|---|---|
| 1.13 | 150 g | | 150 g | |
| 1.14 | 120 g | | 180 g | |
| 1.15 | 90 g | | 210 g | |
| 1.16 | 60 g | | 240 g | |
| 1.17 | 30 g | | 270 g | |
| 1.19 | 150 g | | | 150 g |
| 1.20 | 120 g | | | 180 g |
| 1.21 | 90 g | | | 210 g |
| 1.22 | 60 g | | | 240 g |
| 1.23 | 30 g | | | 270 g |
| 1.24 | | 60 g | | 240 g |
| 1.25 | | 90 g | | 210 g |
| 1.26 | | 120 g | | 180 g |

### Beispiel 1.29

120 g des bei 25°C flüssigen Siloxanharzes 1 wurden mit 90 g des bei 25°C festen Siloxanharzes 2 und mit 90 g silylterminiertem Polyether 2 vermischt. Dazu wurden die Rohstoffe zunächst unter Rühren bei 680 min⁻¹ unter einem verminderten Druck von 100 mbar auf 60°C erwärmt. Nach Erreichen von 60°C wurde die Temperatur für 5 min bei 100mbar gehalten. Diese Mischung wurde in eine feuchtigkeitsdichte Flasche abgefüllt.

### Beispiel 1.30

Der Versuch gemäß Beispiel 1.29 wurde wiederholt. Anstelle der in Beispiel 1.29 angegebenen Mengen der Rohstoffe wurden die in Tabelle 4 angegebenen Mengen verwendet.

### Beispiel 1.31

Der Versuch gemäß Beispiel 1.29 wurde wiederholt. Anstelle des Siloxanharzes 1 wurde das bei 25°C flüssige Siloxanharz 5 verwendet. Es wurden die in Tabelle 4 angegebenen Mengen der Rohstoffe verwendet.

**Tabelle 4:**

| Beispiel | Siloxanharz 1 | Siloxanharz 2 | Siloxanharz 5 | silylterminierter Polyether 2 |
|---|---|---|---|---|
| 1.29 | 120 g | 90 g | | 90 g |
| 1.30 | 180 g | 60 g | | 60 g |
| 1.31 | | 90 g | 120 g | 90 g |

### Beispiel 1.32

100g Siloxanharz 6 wurden mit 50g silylterminiertem Polyether 2 vermischt sowie in Beispiel 1.31 beschrieben verfahren.

### II) Herstellung von Emulsionen

Wenn nicht anders angegeben, wurden die folgenden Beispiele in einem Becher mit einem Volumen von 800 ml und einem Rotor-Stator-Homogenisator Ultra-Turrax® T50 mit einer Umfangsgeschwindigkeit von 16,2 m/s, IKA®-Werke GmbH & CO. KG, D-Staufen hergestellt.
**Emulgator 1:** POE(10)isotridecylether (erhältlich unter dem Namen "Lutensol TO 10" bei BASF SE, D-Ludwigshafen);
**Emulgator 2:** 1:1 Mischung, bezogen auf das Gewicht, aus POE(5)isotridecylether (erhältlich unter dem Namen Lutensol® TO 5 bei BASF SE, D-Ludwigshafen) und POE(200)Rizinusöl (erhältlich unter Etocas™ 200 bei Croda International Plc, Cowick Hall, Snaith Goole East Yorkshire UK);
**Emulgator 3:** 20 Gew.-%ige Lösung eines Polyvinylalkohols mit Verseifungsgrad von 88% und einer Viskosität der 4 Gew.-%igen wässrigen Lösung von 4 mPas bei 25°C (erhältlich unter POLYVIOL® LL2860 bei der Wacker Chemie AG, D-München);
**Emulgator 4:** POE(4)stearylether (erhältlich als Arlypon® SA 4D bei BASF SE, D-Ludwigshafen);
**Emulgator 5:** POE(23)laurylether (erhältlich unter dem Namen "Sympatens ALM/230 G" bei Kolb AG);
**Emulgator 6:** 1:1 Mischung, bezogen auf das Gewicht, aus Sorbitanmonolaurat (erhältlich unter Span® 20 bei Croda International Plc, Cowick Hall, Snaith Goole East Yorkshire UK) und POE(20)-Sorbitanmonolaurat (erhältlich unter Tween® 20 bei Croda International Plc, Cowick Hall, Snaith Goole East Yorkshire UK);
**Emulgator 7:** POE(16)isotridecylether (erhältlich unter dem Namen Arlypon IT 16 bei BASF SE, D-Ludwigshafen);
**Konservierer 1:** Gemisch aus 3 Gewichtsteilen 5-Chlor-2-methyl-2H-isothiazol-3-on und 1 Gewichtsteil 2-Methyl-2H-isothiazol-3-on als 1,5 Gew.-%ige Lösung in Wasser, erhältlich unter der Bezeichnung "Acticide MV" bei Thor GmbH, D-Speyer);
**Konservierer 2:** 2-Methyl-2H-isothiazol-3-on als 10 Gew.-%ige Lösung in Wasser, erhältlich unter der Bezeichnung "Microcare MT" bei Thor GmbH, D-Speyer).

Die in den nachfolgenden Beispielen hergestellten Emulsionen wurden wie folgt geprüft:
Die Teilchengröße wurde mit einem Partikelgrößenanalysator Mastersizer 2000, Fa. Malvern Instruments GmbH, D-Herrenberg, Softwareversion 5.60 mittels Mie-Theorie entsprechend ISO 13320 bestimmt. Dabei wurden folgende Parameter verwendet:
R_{I} der dispersen Phase = 1,39
R_{I} der wässrigen Phase = 1,33
Absorptionsfaktor = 0,01

Die angegebenen Werte für die Teilchengröße beziehen sich immer auf die Medianwerte der Volumenverteilung D_{4,3}.

Die Fließgrenze wurde mit einem Rheometer MCR30X, Anton Paar GmbH, A-Graz bestimmt. Als Methode wurde ein Amplitudensweep bei 25°C mit steigender Schubspannung verwendet. Der angegebene Wert bezieht sich dabei auf den Punkt, bei dem Verlustmodul und Speichermodul denselben Wert haben, und wird in Pa ausgegeben.

Der pH-Wert wurde mit Indikatorstäbchen (nicht blutend) für die Bereiche pH 2,0-9,0; 5,0-10,0 oder 0-14 gemessen (alle erhältlich bei der Merck KGaA, D-Darmstadt).

### Beispiel 2.1

Es wurden 15 g Wasser und 15 g Emulgator 1 vorgelegt und mit 250 g des Gemischs aus Beispiel 1.4 in 3 Minuten unter Homogenisieren bei 4000U/min vermischt. Nach Zugabe von weiteren 10 g Wasser entstand eine gelartige Paste, welche nochmals 5 min bei 4000 U/min homogenisiert wurde. Danach wurde die Paste mit 209,3 g Wasser, 0,45 g Konservierer 1 und 0,25 g Konservierer 2 innerhalb von 5 min bei 4000U/min langsam verdünnt, wodurch sich eine dünne Emulsion bildete.

### Beispiel 2.2

Beispiel 2.1 wurde wiederholt, wobei anstelle von Emulgator 1 Emulgator 2 eingesetzt wurde.

### Beispiel 2.3

Beispiel 2.1 wurde wiederholt, wobei der Anteil an Emulgator 1 auf 25 g erhöht und der Anteil Wasser zum Verdünnen von 209,3 g auf 199,3 g verringert wurde.

### Beispiel 2.4

Beispiel 2.2 wurde wiederholt, wobei der Anteil an Emulgator 2 auf 25 g erhöht und der Anteil Wasser zum Verdünnen von 209,3 g auf 199,3 g verringert wurde.

### Beispiel 2.5

Beispiel 2.4 wurde wiederholt, wobei anstelle von Emulgator 2 Emulgator 3 eingesetzt wurde.

### Beispiel 2.6

Beispiel 2.4 wurde wiederholt, wobei anstelle von Emulgator 2 Emulgator 4 eingesetzt wurde.

### Beispiel 2.7

Beispiel 2.4 wurde wiederholt, wobei anstelle von Emulgator 2 Emulgator 5 eingesetzt wurde.

### Beispiel 2.8

Beispiel 2.1 wurde wiederholt, wobei anstelle von Emulgator 1 Emulgator 6 eingesetzt wurde.

### Beispiel 2.9

Beispiel 2.1 wurde wiederholt, wobei anstelle von Emulgator 1 Emulgator 7 eingesetzt wurde.

### Beispiel 2.10

Beispiel 2.2 wurde wiederholt, wobei der Anteil des Gemischs aus Beispiel 1.4 auf 325 g erhöht, der Anteil an Emulgator 2 auf 32,5 g erhöht und der Anteil an Wasser zum Verdünnen auf 106,8 g verringert wurde.

### Beispiel 2.11

Beispiel 2.2 wurde wiederholt, wobei der Anteil des Gemischs aus Beispiel 1.4 auf 375 g erhöht, der Anteil an Emulgator 2 auf 37,5 g erhöht und der Anteil an Wasser zum Verdünnen auf 51,8 g verringert wurde.

### Beispiele 2.12 bis 2.15 und 2.19 bis 2.39

Beispiel 2.4 wurde wiederholt, wobei anstelle des Gemischs aus Beispiel 1.4 jeweils 250 g der in Tabelle 5 angegebenen Gemische eingesetzt wurden.

Die Eigenschaften der Emulsionen sind in Tabelle 5 zusammengefasst.

**Tabelle 5:**

| Beispiel | Gemisch aus Beispiel | Fließgrenze der gelartigen Phase | Teilchengröße [µm] | pH-Wert nach Herstellung |
|---|---|---|---|---|
| 2.12 | 1.1 | 689 Pa | 460 | 5 |
| 2.13 | 1.29 | - | 1260 | 4,5 |
| 2.14 | 1.30 | 560 Pa | 870 | 4,5 |
| 2.15 | 1.31 | - | 740 | 4,5 |
| 2.19 | 1.2 | - | 590 | 4,5 |
| 2.20 | 1.3 | - | 830 | 4,5 |
| 2.21 | 1.5 | - | 970 | 4,5 |
| 2.22 | 1.7 | - | 390 | 4,5 |
| 2.23 | 1.8 | - | 350 | 4,5 |
| 2.24 | 1.9 | - | 410 | 4,5 |
| 2.25 | 1.10 | - | 390 | 4,5 |
| 2.26 | 1.11 | - | 370 | 4,5 |
| 2.27 | 1.13 | - | 2100 | 4,5 |
| 2.28 | 1.14 | - | 8380 | 4,5 |
| 2.29 | 1.15 | - | 990 | 4,5 |
| 2.30 | 1.16 | - | 1450 | 4,5 |
| 2.31 | 1.17 | - | 1480 | 4,5 |
| 2.32 | 1.19 | - | 1510 | 4,5 |
| 2.33 | 1.20 | - | 1590 | 4,5 |
| 2.34 | 1.21 | - | 710 | 4,5 |
| 2.35 | 1.22 | - | 800 | 4,5 |
| 2.36 | 1.23 | - | 780 | 4,5 |
| 2.37 | 1.24 | - | 670 | 4,5 |
| 2.38 | 1.25 | - | 530 | 4,5 |
| 2.39 | 1.26 | - | 880 | 4,5 |

### Beispiel 2.40

Beispiel 2.16 wurde wiederholt, wobei der Anteil des Gemischs aus Beispiel 1.6 auf 300 g erhöht und der Anteil an Wasser zur Verdünnung von 199,3 auf 149,3 g verringert wurde.

### Beispiel 2.41

Beispiel 2.4 wurde wiederholt, wobei anstelle des Gemischs aus Beispiel 1.4 das Gemisch hergestellt in Beispiel 1.32 eingesetzt wurde. 10 g dieser Emulsion wurden mit 0,13g 3-Aminopropyltrimethoxysilan und 0,27 g 100 Gew.-%iger Essigsäure versetzt. Die Teilchengröße blieb über den gesamten Beobachtungszeitraum unverändert. Diese Emulsion zeigte somit eine gute Lagerstabilität.

### Beispiel 2.42

Beispiel 2.41 wurde wiederholt, wobei anstelle von Emulgator 2 Emulgator 7 eingesetzt wurde.

Die Eigenschaften der Emulsionen sind in Tabelle 6 zusammengefasst.

**Tabelle 6:**

| Beispiel | Fließgrenze der gelartigen Phase | Teilchengröße [µm] | pH-Wert nach Herstellung |
|---|---|---|---|
| 2.1 | - | 1805 | - |
| 2.2 | 1930 Pa | 3490 | - |
| 2.3 | - | 2990 | - |
| 2.4 | - | 650 | 4,5 |
| 2.5 | - | 1700 | - |
| 2.6 | - | 320 | 5 |
| 2.7 | - | 3058 | 5 |
| 2.8 | 1450 Pa | - | - |
| 2.9 | - | - | - |
| 2.10 | 644 Pa | 410 | 4,5 |
| 2.11 | 629 Pa | 890 | 4,5 |
| 2.40 | - | 660 | 4,5 |
| 2.41 | 950 Pa | 338 | 4,5 |
| 2.42 | - | 772 | 4,5 |

### Prüfung der mechanischen Eigenschaften

Zur Herstellung der erforderlichen Prüfkörper wurden 20 g der Emulsion aus Beispiel 2.10, welche aus dem Harz Beispiel 1.4 hergestellt wurde, eingewogen. Dieser Emulsion wurde anschließend 0,02 g Tetramethylguanidin (TMG) zugefügt und für 30 sec bei 2000min⁻¹ im Speedmixer DAC 150FVZ der Firma Hauschild Engineering gemischt. Diese Mischung wurde anschließend in einer PTFE-Form mit einer kreisrunden Vertiefung mit einem Durchmesser von ca. 20 cm gegossen und 7 Tage bei 23°C und 50% relativer Luftfeuchte gelagert. Dabei verdunstete das enthaltene Wasser und es wurden Platten aus vernetztem Material erhalten. Es wurde eine solche Menge in die PTFE-Form eingefüllt, dass die vernetzten Platten nach dem Verdunsten des Wassers eine Dicke von 0,5 mm +/- 0,2 mm aufwiesen.

Zur Charakterisierung der so hergestellten vernetzten Produkte wurden die Kennwerte Zugfestigkeit, Reißdehnung und Spannungswert bei 100% Dehnung nach DIN 53504 bestimmt. Als Prüfkörper wurde der Schulterstab S1 verwendet, mit den Abmessungen wie in DIN 53504 angegeben, außer der Dicke a. Stattdessen wurden Prüfkörper mit einer Dicke von 0,5 mm +/- 0,2 mm hergestellt. Die tatsächlichen Dicken der Prüfkörper wurden vor dem Messen mit einer handelsüblichen Messuhr auf 0,01 mm genau bestimmt. Die Kennwerte werden an einer Universalprüfmaschine UPM 1446 der Firma Zwick GmbH & Co KG bestimmt.

Die Emulsionen der anderen Beispiele wurden analog der Emulsion aus Beispiel 2.10 verarbeitet und geprüft. Diese Ergebnisse sind in Tabelle 7 dargestellt.

**Tabelle 7: mechanische Werte der Emulsionen ohne Füllstoffe**

| Emulsion aus Beispiel | Zugfestigkeit [MPa] | Reißdehnung [%] | Spannung bei 100% Dehnung [MPa] |
|---|---|---|---|
| 2.12 | 2,25 | 385 | 1,6 |
| 2.19 | 1,83 | 270 | 1,3 |
| 2.20 | 1,30 | 310 | 0,8 |
| 2.4 | 1,24 | 418 | 0,7 |
| 2.21 | 1,52 | 476 | 0,7 |
| 2.22 | 2,75 | 369 | 1,6 |
| 2.23 | 1,95 | 306 | 1,2 |
| 2.24 | 1,39 | 252 | 0,9 |
| 2.25 | 1,41 | 303 | 0,8 |
| 2.26 | 1,19 | 278 | 0,7 |
| 2.27 | 4,28 | 20 | / |
| 2.28 | 1,65 | 11 | / |
| 2.29 | 4,16 | 132 | 3,8 |
| 2.30 | 2,42 | 293 | 1,0 |
| 2.31 | 1,45 | 372 | 0,7 |
| 2.32 | 4,99 | 26 | / |
| 2.33 | 1,83 | 206 | 1,2 |
| 2.34 | 4,08 | 123 | 3,5 |
| 2.35 | 1,86 | 221 | 1,0 |
| 2.36 | 6,92 | 59 | / |
| 2.37 | 4,42 | 66 | / |
| 2.38 | 2,89 | 132 | 2,1 |
| 2.39 | 1,40 | 206 | 0,8 |

### III) Emulsionen mit Füllstoffen

**Calciumcarbonat 1:** gemahlenes Calciumcarbonat mit einer mittleren Teilchengröße D50 von 3,4 µm, erhältlich unter der Bezeichnung CARBITAL® C110 bei der Firma Imerys Minerals Ltd., Par, Cornwall, UK;
**Calciumcarbonat 2:** gemahlenes Calciumcarbonat mit einer mittleren Teilchengröße D50 von 5,9µm, erhältlich unter der Bezeichnung OMYACARB® 5-GU bei der Firma Omya GmbH, D-Köln;
**Calciumcarbonat 3:** gemahlenes Calciumcarbonat mit einer mittleren Teilchengröße D50 von 10,7µm, erhältlich unter der Bezeichnung Calcit® FN20 bei der Firma sh minerals GmbH, D-Heidenheim;
**Calciumcarbonat 4:** gemahlenes Calciumcarbonat mit einer mittleren Teilchengröße D50 von 20,6µm, erhältlich unter der Bezeichnung Saxolith® 40HE bei der Firma sh minerals GmbH D-Heidenheim.

### Beispiel 3.1

2,0 g Calciumcarbonat 1 wurden mit 18 g einer Emulsion gemäß Beispiel 2.4 versetzt und für 30 sec bei 2000min⁻¹ im Speedmixer DAC 150FVZ gemischt. Anschließend wurden 0,02 g Tetramethylguanidin (TMG) zugefügt und für 30 sec bei 2000min⁻¹ im Speedmixer DAC 150FVZ gemischt.

### Beispiel 3.2

Der Versuch gemäß Beispiel 3.1 wurde wiederholt. Es wurden dabei 2,0g Calciumcarbonat 1 mit 2g Calciumcarbonat 2 und 16 g einer Emulsion gemäß Beispiel 2.4 verwendet.

### Beispiel 3.3

Der Versuch gemäß Beispiel 3.2 wurde wiederholt. Anstelle der Emulsion gemäß Beispiel 2.4 wurde eine Emulsion gemäß Beispiel 2.31 verwendet.

### Beispiel 3.4

2,0 g Calciumcarbonat 1 wurden mit 0,6 g vollentsalztem Wasser für 30 sec bei 3540min⁻¹ im Speedmixer DAC 150FVZ gemischt. Anschließend wurden 2,0 g Calciumcarbonat 2 und 16 g einer Emulsion gemäß Beispiel 2.4 zugegeben und für 30 sec bei 2000min⁻¹ im Speedmixer DAC 150FVZ gemischt. Danach wurden 0,05 g Tetramethylguanidin (TMG) zugefügt und für weitere 30 sec bei 2000min⁻¹ im Speedmixer DAC 150FVZ gemischt.

### Beispiel 3.5

2,0 g Calciumcarbonat 1 und 6,0 g Calciumcarbonat 2 wurden mit 2,0 g vollentsalztem Wasser versetzt und für 30 sec bei 3540min⁻¹ im Speedmixer DAC 150FVZ gemischt. Anschließend wurden 12 g einer Emulsion gemäß Beispiel 2.4 zugesetzt und für weitere 30 sec bei 2000min⁻¹ im Speedmixer DAC 150FVZ gemischt. Schließlich wurden 0,02 g Tetramethylguanidin (TMG) zugefügt und nochmals für 30 sec bei 2000min⁻¹ im Speedmixer DAC 150FVZ gemischt.

### Beispiele 3.6 bis 3.8

Der Versuch gemäß Beispiel 3.5 wurde wiederholt. Es wurden die in Tabelle 8 angegebenen Einsatzstoffe und -mengen verwendet.

### Beispiel 3.9

Der Versuch gemäß Beispiel 3.5 wurde wiederholt. Zusätzlich wurden 0,4 g 2,2,4-Trimethyl-1,3-pentandiolmonoisobutyrat eingemischt.

### Beispiel 3.10

Der Versuch gemäß Beispiel 3.9 wurde wiederholt. An Stelle der 0,4 g 2,2,4-Trimethyl-1,3-pentandiolmonoisobutyrat wurden 2 g 2,2,4-Trimethyl-1,3-pentandiolmonoisobutyrat eingesetzt.

### Beispiel 3.11

5,0 g Calciumcarbonat 1 und 5,0 g Calciumcarbonat 2 wurden mit 4,5 g vollentsalztem Wasser für 30 sec bei 3540min⁻¹ im Speedmixer DAC 150FVZ gemischt. Anschließend wurden 7,5 g einer Emulsion gemäß Beispiel 2.11 und 3,0 g 2,2,4-Trimethyl-1,3- pentandiolmonoisobutyrat zugegeben und das Ganze für 30 sec bei 2000min⁻¹ im Speedmixer DAC 150FVZ gemischt. Danach wurden 0,02g Tetramethylguanidin (TMG) zugefügt und für weitere 30 sec bei 2000min⁻¹ im Speedmixer DAC 150FVZ gemischt.

### Beispiel 3.12

Der Versuch gemäß Beispiel 3.11 wurde wiederholt. Die Menge 2,2,4-Trimethyl-1,3-pentandiolmonoisobutyrat wurde auf 4 g erhöht.

### Beispiel 3.13

2,0 g Calciumcarbonat 1 und 6,0 g Calciumcarbonat 2 wurden mit 12 g einer Emulsion gemäß Beispiel 2.4 für 30 sec bei 2000min⁻¹ im Speedmixer DAC 150FVZ gemischt. Anschließend wurden 0,02 g einer Lösung aus 10 Gew.-% 1,5,7-Triazabicyclo[4.4.0]dec-5-en (TBD) und 90 Gew.-% vollentsalztem Wasser (TBD 10%ig) zugefügt und für 30 sec bei 2000min⁻¹ im Speedmixer DAC 150FVZ gemischt.

**Tabelle 8: Dispersionen mit Füllstoffen**

| Beispiel | Calciumcarbonat 1 | Calciumcarbonat 2 | Emulsion aus Beispiel 2.4 | TMG [g] | H₂O [g] |
|---|---|---|---|---|---|
| 3.6 | 4,0 g | 4,0 g | 12,0 g | 0,02 | 2,0 |
| 3.7 | 6,0 g | 2,0 g | 12,0 g | 0,02 | 2,0 |
| 3.8 | 5,0 g | 5,0 g | 10,0 g | 0,02 | 2,6 |

Diese Emulsionen der Beispiele 3.1 bis 3.14 wurden anschließend sofort nach der Herstellung auf ein siliconbeschichtetes Trennpapier, erhältlich unter der Bezeichnung "Form RP-1K Release Paper" bei der Firma Paul N. Gardner Co., Inc., Pompano Beach (FL), USA, gegossen und mit Hilfe eines handelsüblichen Rakels zu einem Film mit einer Dicke von 600µm ausgezogen. Dieser Film wurde 7 Tage bei 23°C und 50% relativer Luftfeuchte gelagert. Dabei verdunstete das enthaltene Wasser, und es wurden Filme aus vernetztem Material mit Dicken von 0,3 mm +/- 0,2 mm erhalten. Danach wurden zusammen mit dem Trennpapier Prüfkörper analog DIN 53504 der Form S1 ausgestanzt. Der Film, gebildet aus dem Produkt, wurde dann vom Trennpapier abgezogen, die Dicke der Filme mit einer Messuhr auf 0,01 mm genau bestimmt und die mechanischen Kennwerte in Anlehnung an DIN 53504 mit einer Universalprüfmaschine UPM 1446 der Firma Zwick GmbH & Co KG gemessen. Die erhaltenen Messwerte sind in Tabelle 9 zusammengestellt.

**Tabelle 9: Mechanische Kennwerte von Dispersionen mit Füllstoffen**

| Beispiel | Zugfestigkeit [MPa] | Reißdehnung [%] | Spannung bei 100% Dehnung [MPa] |
|---|---|---|---|
| 3.1 | 1,76 | 675 | 0,67 |
| 3.2 | 1,67 | 669 | 0,76 |
| 3.3 | 1,11 | 406 | 0,62 |
| 3.4 | 1,81 | 766 | 0,76 |
| 3.5 | 1,19 | 428 | 1,09 |
| 3.6 | 1,20 | 160 | 1,15 |
| 3.7 | 1,07 | 87 | 1,22 |
| 3.8 | 0,84 | 25 | - |
| 3.9 | 1,17 | 387 | 1,08 |
| 3.10 | 1,27 | 717 | 0, 63 |
| 3.11 | 0,93 | 370 | 0,71 |
| 3.12 | 0,99 | 522 | 0,47 |
| 3.13 | 0,69 | 1145 | 0,31 |

### Beispiel 4.1

9,0 g Calciumcarbonat 1 und 10,5 g Calciumcarbonat 2 wurden mit 10,5 g einer Emulsion gemäß Beispiel 2.13 für 30 sec bei 3540min⁻¹ im Speedmixer DAC 150FVZ gemischt. Anschließend wurden 0,3 g einer Lösung aus 10 Gew.-% 1,5,7-Triazabicyclo[4.4.0]dec-5-ene (TBD) und 90 Gew.-% vollentsalztem Wasser (TBD 10%ig) zugefügt und für 30 sec bei 3540min⁻¹ im Speedmixer DAC 150FVZ gemischt.

### Beispiel 4.2

Der Versuch gemäß Beispiel 4.1 wurde wiederholt. Die Emulsion gemäß Beispiel 2.13 wurde durch die Emulsion gemäß Beispiel 2.14 ersetzt.

### Beispiel 4.3

Der Versuch gemäß Beispiel 4.1 wurde wiederholt. Die Emulsion gemäß Beispiel 2.13 wurde durch die Emulsion gemäß Beispiel 2.15 ersetzt.

### Beispiel 4.4

Der Versuch gemäß Beispiel 4.1 wurde wiederholt. Die Emulsion gemäß Beispiel 2.13 wurde durch die Emulsion gemäß Beispiel 2.16 ersetzt.

### Beispiel 4.5

Der Versuch gemäß Beispiel 4.3 wurde wiederholt. Calciumcarbonat 2 wurde dabei durch Calciumcarbonat 3 ersetzt.

### Beispiel 4.6

Der Versuch gemäß Beispiel 4.3 wurde wiederholt. Calciumcarbonat 2 wurde dabei durch Calciumcarbonat 4 ersetzt.

### Beispiele 4.7 bis 4.9

Der Versuch gemäß Beispiel 4.5 wurde wiederholt. Dabei wurden die Mengen der Emulsion und Calciumcarbonate 2 und 3 variiert. Diese Rezepturen sind in Tabelle 10 zusammengestellt.

### Beispiel 4.10

18,0 g Calciumcarbonat 1 wurden mit 12,0 g einer Emulsion gemäß Beispiel 2.27 für 30 sec bei 3540min⁻¹ im Speedmixer DAC 150FVZ gemischt. Anschließend wurden 0,03 g einer Lösung aus 50 Gew.-% 1,5,7-Triazabicyclo[4.4.0]dec-5-ene (TBD) und 50 Gew.-% Ethanol zugefügt und für 30 sec bei 3540min⁻¹ im Speedmixer DAC 150FVZ gemischt.

### Beispiel 4.11

Der Versuch gemäß Beispiel 4.10 wurde wiederholt. Calciumcarbonat 1 wurde dabei durch Calciumcarbonat 4 ersetzt.

### Beispiel 4.12

Der Versuch gemäß Beispiel 4.10 wurde wiederholt. Calciumcarbonat 1 wurde dabei durch Calciumcarbonat 2 ersetzt.

### Beispiel 4.13

9,0 g Calciumcarbonat 1 und 9,0 g Calciumcarbonat 4 wurden mit 12,0 g einer Emulsion gemäß Beispiel 2.27 für 30 sec bei 3540min⁻¹ im Speedmixer DAC 150FVZ gemischt. Anschließend wurden 0,03g einer Lösung aus 50 Gew.-% 1,5,7-Triazabicyclo[4.4.0]dec-5-ene (TBD) und 50 Gew.-% Ethanol zugefügt und für 30 sec bei 3540min⁻¹ im Speedmixer DAC 150FVZ gemischt.

### Beispiel 4.14

9,0 g Calciumcarbonat 1 wurden mit 3,0 g vollentsalztem Wasser für 30 sec bei 3540min⁻¹ im Speedmixer DAC 150FVZ gemischt. Anschließend wurden 9,0 g Calciumcarbonat 4 und 12,0 g einer Emulsion gemäß Beispiel 2.27 für 30 sec bei 3540min⁻¹ im Speedmixer DAC 150FVZ eingemischt. Danach wurden 0,03 g einer Lösung aus 50 Gew.-% 1,5,7-Triazabicyclo[4.4.0]dec-5-ene (TBD) und 50 Gew.-% Ethanol zugefügt und für 30 sec bei 3540min⁻¹ im Speedmixer DAC 150FVZ gemischt.

### Beispiel 4.15

9,0 g Calciumcarbonat 1 und 10,5 g Calciumcarbonat 2 wurden mit 10,5 g einer Emulsion gemäß Beispiel 2.15 für 30 sec bei 3540min⁻¹ im Speedmixer DAC 150FVZ gemischt. Anschließend wurden 0,03 g einer Lösung aus 10 Gew.-% 1,5,7-Triazabicyclo[4.4.0]dec-5-ene (TBD) und 90 Gew.-% vollentsalztem Wasser (TBD 10%ig) zugefügt und für 30 sec bei 3540min⁻¹ im Speedmixer DAC 150FVZ gemischt.

### Beispiel 4.17

Der Versuch gemäß Beispiel 4.15 wurde wiederholt. Dabei wurde die Menge der Lösung aus 10 Gew.-% 1,5,7-Triazabicyclo[4.4.0]dec-5-ene (TBD) und 90 Gew.-% vollentsalztem Wasser (TBD 10%ig) auf 0,09 g erhöht.

### Beispiel 4.18

9,0 g Calciumcarbonat 1 und 9,0 g Calciumcarbonat 2 wurden mit 12,0 g einer Emulsion gemäß Beispiel 2.15 für 30 sec bei 3540min⁻¹ im Speedmixer DAC 150FVZ gemischt. Anschließend wurden 0,03g einer Lösung aus 10 Gew.-% 1,5,7-Triazabicyclo[4.4.0]dec-5-en (TBD) und 90 Gew.-% vollentsalztem Wasser (TBD 10%ig) zugefügt und für 30 sec bei 3540min⁻¹ im Speedmixer DAC 150FVZ gemischt.

### Beispiel 4.19

7,5 g Calciumcarbonat 1 und 7,5 g Calciumcarbonat 2 wurden mit 15,0 g einer Emulsion gemäß Beispiel 2.16 für 30 sec bei 3540min⁻¹ im Speedmixer DAC 150FVZ gemischt. Anschließend wurden 0,03g einer Lösung aus 50 Gew.-% 1,5,7-Triazabicyclo[4.4.0]dec-5-en (TBD) und 50 Gew.-% vergälltem Ethanol (TBD/Ethanol 50%ig) zugefügt und für 30 sec bei 3540min⁻¹ im Speedmixer DAC 150FVZ gemischt.

### Beispiel 4.20

Der Versuch gemäß Beispiel 4.19 wurde wiederholt. Dabei wurde die Emulsion gemäß Beispiel 2.16 durch die Emulsion gemäß Beispiel 2.40 ersetzt.

**Tabelle 10: Zusammensetzung der mit Füllstoff und Katalysator versetzten Dispersionen**

| Beispiel | Calciumcarbonat 1 | Calciumcarbonat 3 | Emulsion aus Beispiel 2.15 | TBD 10ig% [g] |
|---|---|---|---|---|
| 4.7 | 9,0 g | 12,0 g | 9,0 g | 0,3 |
| 4.8 | 6,0 g | 13,5 g | 10,5 g | 0,3 |
| 4.9 | 10,5 g | 9,0 g | 10,5 g | 0,3 |

Die Mischungen aus den Beispielen 4.1 bis 4.20 wurden anschließend sofort in eine PTFE-Form mit quaderförmiger Vertiefung der Abmessung Tiefe x Breite x Länge = 4x10x80 mm gestrichen. Diese Formen mit den Prüfkörpern wurden 14 Tage bei 23°C und 50% relativer Luftfeuchte gelagert. Dabei verdunstete das enthaltene Wasser, und es wurden Formkörper aus vernetztem Material erhalten. Danach wurden die ausgehärteten Proben aus der PTFE-Form genommen und die Härte in Shore A in Anlehnung an DIN ISO 7619-1 gemessen. Dabei wurden in Abweichung zur Norm die oben beschriebenen Probekörper der Dimension Dicke x Länge x Breite = 4x10x80 mm verwendet. Die Messung wurde auf der Oberseite der Probekörper vorgenommen. Die Oberseite ist die Seite, die nicht mit dem PTFE der verwendeten Form in Berührung stand. Darüber hinaus wurden in einigen ausgewählten Fällen die Biegefestigkeit, der Biegemodul und die Durchbiegung gemäß ISO 178:2011-04 Verfahren A mit einer Prüfgeschwindigkeit von 2 mm/min bei einer Auflagedistanz von 60 mm gemessen. Die Messungen wurden an jeweils 5 Prüfkörpern durchgeführt. Bei der Prüfung wurden die Probekörper stets so in die Maschine eingelegt, wie sie auch in der PTFE-Form lagen, d.h. mit der Oberseite nach oben. Die angegebenen Werte für die Biegefestigkeit in MPa, den Biegemodul in GPa und die Durchbiegung in mm entsprechen dem jeweiligen Mittelwert der Einzelmessungen, jeweils gerundet auf eine Nachkommastelle entsprechend DIN 1333:1992-02 Abschnitt 4.5. Die Durchbiegung wurde an der Oberseite der Prüfkörper gemessen. Die erhaltenen Messwerte sind in Tabelle 11 zusammengestellt.

**Tabelle 11:**

| Beispiel | Durchbiegung | Biegefestigkeit | E-Modul | ShA-Härte |
|---|---|---|---|---|
| | [mm] | [MPa] | [GPa] | |
| 4.1 | | | | 92 |
| 4.2 | 0, 6 | 7,4 | 2,3 | 94 |
| 4.3 | | | | 95 |
| 4.4 | | | | 88 |
| 4.5 | | | | 94 |
| 4.6 | | | | 95 |
| 4.7 | | | | 90 |
| 4.8 | | | | 96 |
| 4.9 | | | | 95 |
| 4.10 | 2,0 | 4,9 | 0,5 | |
| 4.11 | 1,7 | 7,7 | 0,3 | |
| 4.12 | 4,1 | 4,1 | | |
| 4.13 | 1,8 | 5,3 | 0,2 | 91 |
| 4.14 | 2,2 | 5,9 | 0,4 | 96 |
| 4.15 | 0,1 | 1,8 | | 71 |
| 4.17 | 1,6 | 2,3 | 0,2 | 84 |
| 4.18 | 1,8 | 2,0 | 0,1 | 76 |
| 4.19 | 4,2 | 8,4 | 0,7 | 98 |
| 4.20 | | | | 93 |

## Patentansprüche

1. Dispersionen enthaltend
(A) silylterminierte Polymere der Formel 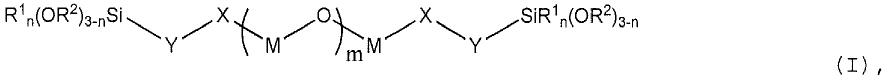 wobei
**R**¹ gleich oder verschieden sein kann und einen einwertigen, gegebenenfalls substituierten, SiC-gebundenen Kohlenwasserstoffrest darstellt,
**R**² gleich oder verschieden sein kann und Wasserstoffatom oder einen einwertigen, gegebenenfalls substituierten Kohlenwasserstoffrest darstellt,
**X** gleich oder verschieden sein kann und -O-, -NR³ mit R³ gleich Wasserstoffatom, aliphatisch gesättigte oder aromatische Kohlenwasserstoffreste mit 1 bis 12 Kohlenstoffatomen bedeutet,
**Y** gleich oder verschieden sein kann und Reste -(CH₂)₃-, -(CH₂)₃NHC(=O)-, -CH₂- oder -CH₂NHC(=O)- darstellt,
**M** gleich oder verschieden sein kann und Reste -CH₂CH₂-, -CH₂CH(CH₃)-, -(CH₂)₄- oder -(CH₂)₆- bedeutet,
**n** gleich 0 oder 1 ist und
**m** eine ganze Zahl von 50 bis 500 darstellt,
(B) Organosiliciumverbindungen enthaltend Einheiten der Formel
R⁴ₐ(R⁵O)_{b}SiO_{(4-a-b)/2} (II),
wobei
**R**⁴ gleich oder verschieden sein kann und einen einwertigen, SiC-gebundenen, gegebenenfalls mit Halogenresten, Sauerstoff oder Stickstoff substituierten Kohlenwasserstoffrest bedeutet,
**R**⁵ gleich oder verschieden sein kann und Wasserstoffatom oder einen einwertigen, gegebenenfalls substituierten Kohlenwasserstoffrest bedeutet,
**a** 0, 1, 2 oder 3 ist,
**b** 0, 1, 2 oder 3 ist,
mit der Maßgabe dass die Summe a+b≤3 ist, pro Molekül mindestens zwei Gruppen -OR⁵ anwesend sind und in mindestens 40 % al-1er Einheiten der Formel (II) a gleich 0 oder 1 ist,
(C) Emulgatoren,
(D) Wasser,
gegebenenfalls (E) Katalysatoren,
gegebenenfalls (F) Füllstoffe und
gegebenenfalls (G) Additive.

2. Dispersionen gemäß Anspruch 1, **dadurch gekennzeichnet, dass** in Komponente (A) mindestens 90 % aller Reste M die Bedeutung von -CH₂CH(CH₃)- haben.

3. Dispersionen gemäß Anspruch 1 oder 2, **dadurch gekennzeichnet, dass** in Siliciumverbindungen (B) in mindestens 50 % aller Einheiten der Formel (II) a gleich 1 ist.

4. Dispersionen gemäß einem oder mehreren der Ansprüche 1 bis 3, **dadurch gekennzeichnet, dass** es sich bei Katalysator (E) um Carbonsäuren, Dicarbonsäuren, Organophosphorsäure und ihre Mono- und Diester, Phosphonsäuren und ihre Monoester sowie Diorganophosphinsäuren, um organische Stickstoffverbindungen oder um Salze der genannten Säuren mit den genannten Stickstoffverbindungen handelt.

5. Dispersionen gemäß einem oder mehreren der Ansprüche 1 bis 4, **dadurch gekennzeichnet, dass** es sich bei den Dispersionen um solche handelt enthaltend,
jeweils bezogen auf 100 Gewichtsteile des Gesamtgewichts an Komponenten (A) und (B),
2 bis 10 Gewichtsteile Komponente (C),
20 bis 100 Gewichtsteile Komponente (D),
10 bis 50 Gewichtsteile Komponente (F),
gegebenenfalls 0,001 bis 2 Gewichtsteile Komponente (E) und gegebenenfalls 0,0005 bis 2 Gewichtsteile Komponente (G) ausgewählt aus Konservierungsmitteln und Lichtschutzmitteln,
mit der Maßgabe, dass das Gewichtsverhältnis von Komponente (B) zu Komponente (A) im Bereich von 0,1:1 bis 1:1 liegt.

6. Dispersionen gemäß einem oder mehreren der Ansprüche 1 bis 4, **dadurch gekennzeichnet, dass** es sich bei den Dispersionen um solche handelt enthaltend,
jeweils bezogen auf 100 Gewichtsteile des Gesamtgewichts an Komponenten (A) und (B),
2 bis 10 Gewichtsteilen Komponente (C),
20 bis 100 Gewichtsteilen Komponente (D),
600 bis 1400 Gewichtsteile Komponente (F),
gegebenenfalls 0,001 bis 2 Gewichtsteile Komponente (E) und gegebenenfalls 0,0005 bis 2 Gewichtsteile (G) ausgewählt aus Konservierungsmitteln,
mit der Maßgabe, dass das Gewichtsverhältnis von Komponente (B) zu Komponente (A) 1:1 bis 10:1 beträgt.

7. Verfahren zur Herstellung der Dispersionen gemäß einem oder mehreren der Ansprüche 1 bis 6 durch Mischen der Komponenten (A), (B) sowie gegebenenfalls (C) und weiteren Komponenten und anschließendem Emulgieren der erhaltenen Mischung durch Zugabe von Wasser (D) sowie gegebenenfalls Komponenten (C) und gegebenenfalls weiteren Komponenten, mit der Maßgabe, dass Komponente (C) eingesetzt wird.

8. Verfahren gemäß Anspruch 7, in dem
in einem 1. Schritt
Komponenten (A) und (B) durch Rühren und/oder Homogenisieren vermischt werden,
in einem 2. Schritt
zu der im 1. Schritt erhaltenen Mischung Komponenten (C) und
(D) zugegeben werden und durch schnelles Rühren eine Emulsion hergestellt wird,
gegebenenfalls in einem 3. Schritt
weiteres Wasser (D) zugegeben wird und
gegebenenfalls in einem 4. Schritt
weitere Stoffe eingemischt werden, die gegebenenfalls mit weiterem Wasser (D) vorgemischt sind.

9. Formkörper hergestellt durch Vernetzung der Dispersionen gemäß einem oder mehreren der Ansprüche 1 bis 6 oder hergestellt nach Anspruch 7 oder 8, nachdem das Wasser ganz oder teilweise entfernt wurde.

10. Formkörper gemäß Anspruch 9, **dadurch gekennzeichnet, dass** es sich um Beschichtungen oder Dichtungsmassen handelt.

## Claims

1. Dispersions comprising
(A) silyl-terminated polymers of the formula 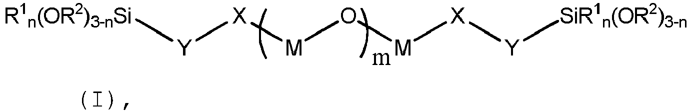 where
**R**¹ may be identical or different and is a monovalent, optionally substituted, SiC-bonded hydrocarbyl radical,
**R**² may be identical or different and is hydrogen atom or a monovalent, optionally substituted hydrocarbyl radical,
**X** may be identical or different and is -O-, -NR³ where R³ is hydrogen atom, aliphatically saturated or aromatic hydrocarbyl radicals having 1 to 12 carbon atoms,
**Y** may be identical or different and is radicals -(CH₂)₃-, - (CH₂)₃NHC(=O)-, -CH₂- or -CH₂NHC(=O)-,
**M** may be identical or different and is radicals -CH₂CH₂-, -CH₂CH(CH₃)-, -(CH₂)₄- or -(CH₂)₆-,
**n** is 0 or 1, and
**m** is an integer from 50 to 500,
(B) organosilicon compounds comprising units of the formula
R⁴ₐ(R⁵O)_{b}SiO_{(4-a-b)/2} (II),
where
**R**⁴ may be identical or different and is a monovalent, SiC-bonded hydrocarbyl radical optionally substituted by halogen radicals, oxygen or nitrogen,
**R**⁵ may be identical or different and is hydrogen atom or a monovalent, optionally substituted hydrocarbyl radical,
**a** is 0, 1, 2 or 3,
**b** is 0, 1, 2 or 3,
with the proviso that the sum a+b≤3, there are at least two groups -OR⁵ per molecule, and a is 0 or 1 in at least 40% of all units of the formula (II),
(C) emulsifiers,
(D) water,
optionally (E) catalysts,
optionally (F) fillers, and
optionally (G) additives.

2. Dispersions according to Claim 1, **characterized in that** at least 90% of all radicals M in component (A) have the definition of -CH₂CH(CH₃)-.

3. Dispersions according to Claim 1 or 2, **characterized in that** in silicon compounds (B), a is 1 in at least 50% of all units of the formula (II).

4. Dispersions according to one or more of Claims 1 to 3, **characterized in that** catalyst (E) comprises carboxylic acids, dicarboxylic acids, organophosphoric acid and monoesters and diesters thereof, phosphonic acids and the monoesters thereof, and diorganophosphinic acids, or organic nitrogen compounds, or salts of the stated acids with the stated nitrogen compounds.

5. Dispersions according to one or more of Claims 1 to 4, **characterized in that** the dispersions are those comprising,
based in each case on 100 parts by weight of the total weight of components (A) and (B),
2 to 10 parts by weight of component (C),
20 to 100 parts by weight of component (D),
10 to 50 parts by weight of component (F),
optionally 0.001 to 2 parts by weight of component (E), and
optionally 0.0005 to 2 parts by weight of component (G) selected from preservatives and light stabilizers,
with the proviso that the weight ratio of component (B) to component (A) is in the range from 0.1:1 to 1:1.

6. Dispersions according to one or more of Claims 1 to 4, **characterized in that** the dispersions are those comprising,
based in each case on 100 parts by weight of the total weight of components (A) and (B),
2 to 10 parts by weight of component (C),
20 to 100 parts by weight of component (D),
600 to 1400 parts by weight of component (F), optionally 0.001 to 2 parts by weight of component (E), and
optionally 0.0005 to 2 parts by weight of (G) selected from preservatives,
with the proviso that the weight ratio of component (B) to component (A) is 1:1 to 10:1.

7. Method for producing the dispersions according to one or more of Claims 1 to 6 by mixing components (A), (B), and optionally (C) and further components and subsequently emulsifying the resulting mixture by adding water (D) and also optionally components (C) and optionally further components, with the proviso that component (C) is used.

8. Method according to Claim 7, in which
in a 1st step
components (A) and (B) are mixed by stirring and/or homogenizing,
in a 2nd step
components (C) and (D) are added to the mixture obtained in the 1st step, and an emulsion is produced by rapid stirring,
optionally in a 3rd step
further water (D) is added, and
optionally in a 4th step
further substances are mixed in, optionally as a premix with further water (D).

9. Shaped article produced by crosslinking the dispersions according to one or more of Claims 1 to 6 or produced according to Claim 7 or 8, after complete or partial removal of the water.

10. Shaped article according to Claim 9, **characterized in that** it is a coating or sealant.

## Revendications

1. Dispersions contenant
(A) des polymères à terminaison silyle de formule 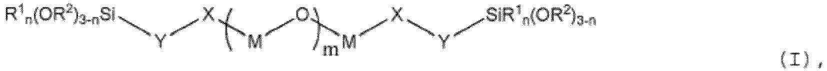
R¹ pouvant être identique ou différent et représentant un radical hydrocarboné monovalent, éventuellement substitué, Si-C-lié,
R² pouvant être identique ou différent et représentant un atome d'hydrogène ou un radical hydrocarboné monovalent, éventuellement substitué, X pouvant être identique ou différent et signifiant -O-, -NR³ avec R³ étant un atome d'hydrogène, des radicaux hydrocarbonés aliphatiques saturés ou aromatiques comportant 1 à 12 atomes de carbone,
Y pouvant être identique ou différent et représentant des radicaux -(CH₂)₃-, -(CH₂)₃NHC(=O)-, -CH₂- ou -CH₂NHC(=O)-,
M pouvant être identique ou différent et signifiant des radicaux -CH₂CH₂-, -CH₂CH (CH₃) -, - (CH₂)₄- ou - (CH₂)₆-,
n étant égal à 0 ou 1 et
m représentant un nombre entier de 50 à 500,
(B) des composés d'organosilicium contenant des motifs de formule
R⁴ₐ(R⁵O)_{b}SiO_{(4-a-b)/2} (II),
R⁴ pouvant être identique ou différent et signifiant un radical hydrocarboné monovalent, SiC-lié, éventuellement substitué par des radicaux halogène, oxygène ou azote,
R⁵ pouvant être identique ou différent et signifiant un atome d'hydrogène ou un radical hydrocarboné monovalent, éventuellement substitué,
a étant 0, 1, 2 ou 3,
b étant 0, 1, 2 ou 3,
étant entendu que la somme a + b est ≤ 3, au moins deux groupes -OR⁵ sont présents par molécule et dans au moins 40 % de tous les motifs de formule (II) a est égal à 0 ou 1,
(C) des émulsifiants,
(D) de l'eau,
éventuellement (E) des catalyseurs,
éventuellement (F) des charges et
éventuellement (G) des additifs.

2. Dispersions selon la revendication 1, **caractérisées en ce que** dans le composant (A) au moins 90 % de tous les radicaux M possèdent la signification de - CH₂CH(CH₃)-.

3. Dispersions selon la revendication 1 ou 2, **caractérisées en ce que** dans les composés de silicium (B) dans au moins 50 % de tous les motifs de formule (II) a est égal à 1.

4. Dispersions selon l'une ou plusieurs des revendications 1 à 3, **caractérisées en ce que** le catalyseur (E) sont des acides carboxyliques, des acides dicarboxyliques, de l'acide organophosphorique et leurs monoesters et diesters, des acides phosphoniques et leurs monoesters ainsi que des acides diorganophosphiniques, des composés azotés organiques ou des sels des acides mentionnées avec les composés azotés mentionnés.

5. Dispersions selon l'une ou plusieurs des revendications 1 à 4, **caractérisées en ce que** les dispersions sont celles contenant,
à chaque fois par rapport à 100 parties en poids du poids total en composants (A) et (B),
2 à 10 parties en poids de composant (C),
20 à 100 parties en poids de composant (D),
10 à 50 parties en poids de composant (F), éventuellement 0,001 à 2 parties en poids de composant (E) et
éventuellement 0,0005 à 2 parties en poids de composant (G) choisi parmi des conservateurs et des agents photoprotecteurs,
étant entendu que le rapport pondéral du composant (B) au composant (A) se situe dans la plage de 0,1:1 à 1:1.

6. Dispersions selon l'une ou plusieurs des revendications 1 à 4, **caractérisées en ce que** les dispersions sont celles contenant,
à chaque fois par rapport à 100 parties en poids du poids total en composants (A) et (B),
2 à 10 parties en poids de composant (C),
20 à 100 parties en poids de composant (D),
600 à 1400 parties en poids de composant (F), éventuellement 0,001 à 2 parties en poids de composant (E) et
éventuellement 0,0005 à 2 parties en poids de composant (G) choisi parmi des conservateurs, étant entendu que le rapport pondéral du composant (B) au composant (A) se situe dans la plage de 1:1 à 10:1.

7. Procédé pour la préparation des dispersions selon l'une ou plusieurs des revendications 1 à 6 par mélange des composants (A), (B) ainsi qu'éventuellement (C) et des composants supplémentaires et l'émulsification ultérieure du mélange obtenu par ajout d'eau (D) ainsi qu'éventuellement des composants (C) et éventuellement des composants supplémentaires, étant entendu que le composant (C) est utilisé.

8. Procédé selon la revendication 7, dans lequel
dans une étape 1
les composants (A) et (B) sont mélangés par agitation et/ou homogénéisation,
dans une étape 2
les composants (C) et (D) sont ajoutés au mélange obtenu dans l'étape 1 et une émulsion est produite par agitation rapide,
éventuellement dans une étape 3
de l'eau supplémentaire (D) est ajoutée et éventuellement dans une étape 4
d'autres substances sont mélangées, qui sont éventuellement prémélangées avec de l'eau supplémentaire (D).

9. Corps moulé préparé par réticulation des dispersions selon l'une ou plusieurs des revendications 1 à 6 ou préparé selon la revendication 7 ou 8, après que l'eau a été totalement ou partiellement éliminée.

10. Corps moulé selon la revendication 9, **caractérisé en ce que** ce sont des revêtements ou des masses d'étanchéité.
